(19) Europäisches Patentamt
European Patent Office
Office européen des brevets

(11) Publication number: **0 226 959 A2**

(12) # EUROPEAN PATENT APPLICATION

(21) Application number: **86117243.5**

(51) Int. Cl.[4]: **G06F 15/72**

(22) Date of filing: **11.12.86**

(30) Priority: **18.12.85 JP 285150/85**

(43) Date of publication of application:
**01.07.87 Bulletin 87/27**

(84) Designated Contracting States:
**DE FR GB IT**

(71) Applicant: **Horikita, Tsukasa**
**1-4-27-103 Motoazabbu Minatu-ku**
**Tokyo 106(JP)**

(72) Inventor: **Horikita, Tsukasa**
**1-4-27-103 Motoazabbu Minatu-ku**
**Tokyo 106(JP)**

(74) Representative: **Patentanwälte Grünecker, Kinkeldey, Stockmair & Partner**
**Maximilianstrasse 58**
**D-8000 München 22(DE)**

(54) **Make-up simulator.**

(57) A make-up simulator wherein all necessary operations can be executed in accordance with menus on a display picture and various delicate graphic image processing functions essentially required for a make-up are incorporated. In the make-up simulator, a face of an object person is digitized as a graphic image of a high quality using a color TV camera and then the graphic image thus inputted is processed is various ways including revisions and changes and combinations of colors based on the procedure of an actual make-up and then outputted to a color monitor TV set and/or a color hard copy device. The make-up simulator comprises a graphic image memory and a graphic image memory controller for controlling the graphic image memory, and a co-ordinate input device such as a tablet and a pressure sensitive stylus pen for inputting co-ordinates of a working location and a working condition of a graphic image of a face. A graphic image processing circuit executes required processings of a graphic image and controls the color monitor TV set.

FIG. 1

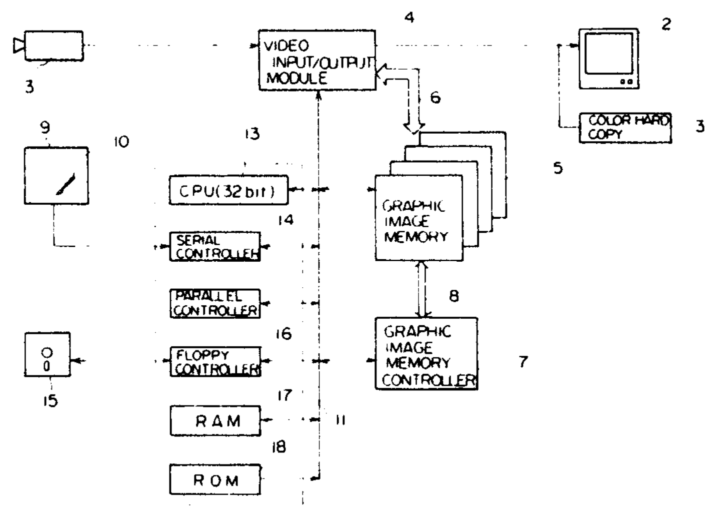


Xerox Copy Centre

# MAKE-SIMULATOR

## BACKGROUND OF THE INVENTION

The invention relates to a device for processing a graphic image of a face of an object person with a plane paint system using a computer to simulate make-up of the object person.

The invention provides a computer system designed for simulation of a make-up wherein a face of an object person is digitized as a graphic image of high quality using a color TV camera and then the graphic image thus inputted is processed in various ways including revisions and changes and combinations of colors based on the procedure of a make-up and then outputted to a color monitor TV set and/or a color hard copy device. The computer system exclusively for a make-up according to the invention is designed and optimized to efficiently complete such a series of operations in a possible shortest period of time using the up-to-date semiconductor technology.

Conventionally, no computer system has been designed exclusively for a make-up simulator, and only a general purpose plane paint system is employed as a make-up simulator.

However, employment of such a conventional general purpose plane paint system as a make-up simulator raises following problems.

At first, the combination of ready-made hardware and software as in a conventional system involves various restrictions and is disadvantageous in cost and function. In particular, input of data is in most cases performed by way of a keyboard, which results in a low operability and is inconvenient to a user. Also as for a graphic image processing function, requirements for delicate and fine operations necessary for a make-up are not met, and hence satisfactory simulation cannot be attained. Further, processing is not accomplished at a high speed, and hence the system is not suitable for demonstration at the shop-front. In addition, the system is large in size and high in weight and hence is inconvenient for carrying and transportation.

## SUMMARY OF THE INVENTION

It is an object of the present invention to provide a make-up simulator which resolves such problems of conventional systems as described above.

It is another object of the invention to provide a make-up simulator wherein all necessary operations can be executed in accordance with menus on a picture to improve the operability without particularly using a CRT Terminal.

It is a further object of the invention to provide a make-up simulator wherein various delicate graphic image processing functions essentially required for a make-up are incorporated to improve the performance thereof to effect simulation accordance with an actual make-up.

It is a still further object of the invention to provide a make-up simulator wherein a mass processing processor and/or a high density, high capacity semiconductor graphic image memory are incorporated to reduce the overall size and weight of the device and raise the processing speed.

According to the present invention, there is provided a make-up simulator, comprising a color image pickup device for converting an original graphic image of a face of an object person into input video signals, a color display unit for reproducing worked output video signals as a worked graphic image of a face, a video signal input/output module connected to said color image pickup device and said color display unit for converting input video signals into dot data and for converting worked dot data into output video signals, a graphic image memory connected to said video signal input/output module by way of a dot data bus for storing dot data therein, a graphic image memory controller connected to said graphic image memory by way of a memory bus for controlling reading out of and writing into said graphic image memory, a co-ordinate input device for inputting co-ordinates of a working location and a working condition of a graphic image of a face, and a graphic image processing circuit coupled to said graphic image memory controller and said co-ordinate input device by way of a system bus for receiving dot data from said graphic image memory controller in response to inputted working location co-ordinates, selectively executing a working of painting, brushing, chalking, washing, copying, mixing or erasing of dot data in accordance with the inputted working condition and then delivering dot data thus worked to said graphic image memory controller and for controlling indication on said display unit of a location of co-ordinates inputted from said co-ordinate input device.

The above and other objects, features and advantages of the present invention will become apparent from the following description and the appended claims, taken in conjunction with the accompanying drawings.

## BRIEF DESCRIPTION OF THE DRAWINGS

Fig. I is a block diagram illustrating a general construction of a make-up simulator according to the present invention;

Fig. 2 is a schematic illustration of a picture of a color monitor TV set;

Fig. 3 is a block diagram of a video signal input/ output module;

Fig. 4 is a block diagram of graphic image memory circuits and a graphic image memory controller circuit;

Fig. 5 is a block diagram of a red memory circuit;

Fig. 6 is a block diagram of the graphic image memory controller circuit;

Fig. 7 is a flow chart of a main loop of a control program;

Figs. 8(A) and 8(B) are flow charts of a window specifying routine;

Figs. 9(A) and 9(B) are flow charts of a color palette task routine;

Figs. I0(A) and I0(B) are flow charts of a function menu task routine;

Figs. II(A) and II(B) are flow charts of a brush size number determining task routine;

Fig. I2 is a flow chart of a working task routine;

Fig. I3 is a flow chart of a painting routine;

Fig. I4 is a diagrammatic representation of a graphic image memory within a working graphic image window;

Fig. I5 is a flow chart of a painting routing for a picture element;

Fig. I6 is a diagrammatic representation of a graphic image memory;

Fig. I7 is a flow chart of a brushing routine;

Fig. I8 is a flow chart of a chalking routine;

Fig. I9 is a flow chart of a washing routine;

Fig. 20 is a flow chart of a copying routine;

Fig. 2I is a flow chart of a mixing routine;

Fig. 22 is a flow chart of an erasing routine;

Fig. 23 is a flow chart of a mask producing routine;

Figs. 24(A) and 24(B) are schematic illustrations of a masking working;

Fig. 25 is a flow chart of a color changing routine;

Figs. 26(A), 26(B) are 26(C) are schematic illustrations of a color changing working;

Figs. 27 is a flow chart of a scaling routine;

Figs. 28(A), 28(B) and 28(C) are schematic illustrations of a scaling working;

Fig. 29 is a flow chart of a mirroring routine;

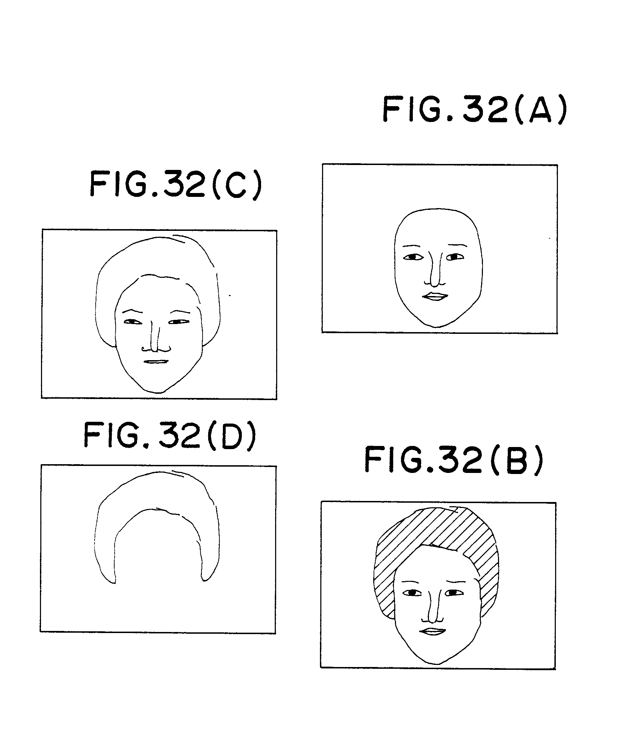

Figs. 30(A) and 30(B) are schematic illustrations of a mirroring working;

Fig. 3I is a flow chart of a composing routine; and

Figs. 32(A), 32(B), 32(C) and 32(D) are schematic illustrations of a composing working.

## DESCRIPTION OF THE PREFERRED EMBODIMENT

Referring first to Fig. I, a make-up simulator according to the present invention comprises a three-tube type color TV camera I as an example of an image pickup device for inputting an original graphic image of a face of an object person to the make-up simulator therethrough. The make-up simulator further comprises a color monitor TV set 2 as a display unit for displaying thereon a graphic image of the face during or after working. Since the color monitor TV set 2 makes a display in a non-interlacing scanning output mode, a bright, non-flickering graphic image can be attained, and hence the color monitor TV set 2 is suitable for demonstration at the shop-front. In order to convert output signals of the TV camera into non-interlaced signals, the color monitor TV set 2 contains a scan converter circuit therein. The make-up simulator further comprises a color hard copy device 3 for fixing a worked graphic image to a face of a sheet of paper to be distributed to a customer, and a video signal input/output module 4 which in turn contains therein an analog to digital (A/D) converter I0I fr digitizing video signals inputted by way of the color TV camera I to form original dot data and a digital to analog (D/A) converter I02 for converting worked dot data into analog

signals to deliver output video signals to the color monitor TV set 2 or the color hard copy device 3. Details of the video signal input/output module 4 are illustrated in Fig. 3. In order to produce a non-interlaced output, the video signal input/output module 4 includes a scan converter circuit and a synchronizing signal generating follower circuit I03. The video signal input/output module may be physically divided into an input portion and an output portion.

Referring back to Fig. I, the make-up simulator further comprises a graphic image memory 5 connected to the video signal input/output module 4 by way of a dot data bus 6. The graphic image memory 5 is formed from 256-kilobit semiconductor memory chips and stores therein I024 $\times$ 2048 dot data for the three rod (R), green (G) and blue (B) primary colors in 256 gradations. Accordingly, the number of colors for display amounts to about I6.77 millions, which enables a very delicate colored make-up. The graphic image memory 5 receives original dot data by way of the dot data bus 6 and develops worked dot data. Details of the graphic image memory 5 are illustrated in Figs. 4 and 5. Fig. 5 illustrates a red graphic image memory I04 as an example of such graphic image memory 5. The graphic image memory I04 includes shift registers 5 for converting parallel dot data into serial dot data and vice versa.

Referring back again to Fig. I the make-up simulator further comprises a graphic image memory controller 7 connected to the graphic image memory 5 by way of a memory bus 8. The graphic image memory controller 7 controls writing and reading of dot data into and out of the graphic image memory 5 in response to an address instruction from a CPU. Details of the graphic image memory controller 7 are illustrated in Fig. 6. In order to produce an address signal for the graphic image memory 5, the graphic image memory controller 7 includes a location resistor I06, a horizontal counter I07, a vertical counter I08 and an address multiplexer I09. Referring back to Fig. I, the make-up simulator further comprises a tablet 9 as an example of a co-ordinate input device, and a stylus pen I0 is used to input data by way of the tablet 9. Thus, the tablet 9 acts as a device to input co-ordinate data of a working location and a working condition of an original graphic image and deliver an execution instruction for a make-up to the CPU using the stylus pen I0. The input is of the menu type wherein a menu is displayed on the color monitor TV set 2, and hence the operability is very high. Further, the stylus pen I0 is of the pressure sensitive type, which enables the compatibility of the make-up simulator with software for natural touch such as brushing. Co-ordinate data of a location of a graphic image to be worked are inputted with a location of the stylus pen I0 on the tablet 9, and such a location of the stylus pen I0 is simultaneously displayed also on the color monitor TV set 2. Accordingly, a working point can be inputted very conveniently.

The make-up simulator further comprises a graphic image processing circuit I2 connected to the graphic image memory controller 7 and the tablet 9 by way of a system but II. The graphic image processing circuit I2 receiver dot data from the graphic image memory controller 7 in response to working location co-ordinate data inputted from the tablet 9, selectively executes one of workings of painting, brushing, chalking, washing, copying, mixing and erasing of dot data in response to working conditions inputted from the tablet 9, and delivers dot data thus worked to the graphic image memory controller 7. Details of such workings will be hereinafter described. The graphic image processing circuit I2 further controls indication of inputted co-ordinates of the tablet 9 on the display unit 2. The graphic image processing circuit I2 includes a 32-bit CPU processor I3 (MC68020, I6MHz), a serial controller I4 serving as an interface to the tablet 9, a floppy controller I6 serving as an interface to a 3.5 inch floppy disk drive unit I5, a RAM I7 (256 kilobyte high speed static memory), and a ROM I8 (I28 kilobyte). The ROM I8 and the RAM I7 store therein basic operation programs for the entire system while specific software for make-up simulation is stored in a floppy disk which is used on the floppy disk drive unit I5. The contents of the software will be hereinafter described. The CPU I3 executes control of the entire system and calculation necessary for processing of dot data. The CPU I3 is constituted as a 32-bit CPU which allows calculations at a high speed.

Now, basic operations of the make-up simulator will be described with reference to Fig. 2 which illustrates a display picture of the color monitor TV set 2. X, Y co-ordinates on the display picture correspond one-to-one to X, Y co-ordinates of the tablet 9 and also to X, Y address coordinates of the graphic image memory 5, and accordingly individual display areas (hereinafter referred to as windows) of the display picture correspond simultaneously to input areas of the tablet 9 and to storage areas of the graphic image memory 5. Accordingly, the words "co-ordinate" and "window" are used commonly with respect to the three devices. Such corresponding relationships of the co-ordinates are controlled by the graphic image processing circuit I2.

The windows include an original (source) graphic image window I9 which displays thereon a graphic image before working of a face of an object person obtained by way of the color TV camera I, a worked - (target) graphic image window 20 which displays thereon a graphic image during or after working and no which a point (dot) to be worked is specified by a stylus pen location spot 2I, and a color palette window 22

through which a color for coloring is specified and which includes 20 color palettes 22a in the display picture shown in Fig. 2. One of the color pallettes 22a is selected by the spot 2l to input the same to the CPU. A similar inputting method also applies to following windows. The windows further include an additive color amount determining window 23 including a bar graph for specifying the density to be colored, and a pen size specifying window 24 for specifying a circle of a predetermined radius in order that picture elements (dots) within a circle of the predetermined radius around a point of co-ordinates selected by the spot 2l may be worked collectively with same conditions. The circle corresponds to the size of a brush for an actual make-up, and the pen size specifying window 24 shown in Fig. 2 includes four such circles to allow selection of one of four pens which are different in size from each other. A pen having a smaller size will allow a more delicate working. The windows further include a function menu window 25 for selecting a sort of a working therethrough. Details of various workings will be described below.

(l) Painting

Picture elements are daubed in a color.

(2) Brushing

Picture elements are repetitively colored. This is a graphic image retouching function and is suitable to provide intensity in an edgewise direction or to provide shading. This is considered important also in an actual make-up.

(3) Chalking

This is called random tiling and colors a plurality of dots at random. This is necessary for making up an eyebrow or an eye. This resultantly allows spotted coloring. Or otherwise, this will result in coloring like pointillism.

(4) Washing

This corresponds to washing off of the make-up and changes the color while maintaining the brightness (tone) of a current color in order to restore a color of the bare skin.

(5) Copying

Part of a graphic image is transferred to another part. This is used, for example, to transplant or remove a mole.

(6) Mixing

Colors of adjacent dots are averaged to make the texture finer.

(7) Erasing

A worked graphic image is cancelled and an original graphic image is restored.

(8) Mask Production

A pattern of, for example, a mouth or hair is cut out from an original graphic image to produce a mask.

(9) Color Changing

The color of a graphic image within a designated mask is collectively changed into a designated color. This is used for co-ordination.

(l0) Scaling (Enlargement/Reduction)

A graphic image is partially enlarged or reduced in the X or Y direction.

(ll) Mirroring

A graphic image is turned left side right. This is used to produce a condition of a face reflected by a mirror.

(l2) Composing

A mask pattern is replaced by another to facilities selection of a hair style or the like. This is used for co-ordination.

In summary, at first a color palette, an additive color amount, a pen size and a function are determined by the spot 2l, and then the spot 2l is moved to a desired location of a worked graphic image 20 to execute an intended working or make-up. Since all necessary operations can be executed with menus on the display picture in this manner, the operability is high. Besides, since all working functions required for an actual make-up are involved, delicate and fine simulation is available.

Now, operation of the make-up simulator according to the present invention will be described in detail with reference to flow charts shown in the accompanying drawings.

Fig. 7 is a flow chart of a main loop of the entire make-up simulator. Referring to Fig. 7, at first co-ordinates (X = HHH, Y = VVV) of a point inputted by way of the tablet are read, and then it is determined to which window the co-ordinates belong. Here, in case a flag W = 0, the co-ordinates (X, Y) belong to the color palette window 22, and accordingly a color pallet task is executed to specify a color for coloring. In case W = l, the co-ordinates (X, Y) belong to the function menu window 25, and accordingly a function menu task is executed to specify contents of a working. It is to be noted that in case of a working which is independent of any other working, the working is executed subsequently by a direct command executing task therefor. In case W = 2, the co-ordinates (X, Y) belong to the pen size specifying window 24, and

accordingly a pen size specifying task is executed to specify a desired size of a pen. In case W=3, the co-ordinates (X, Y) belong to the worked graphic image window 20, and accordingly a graphic image working task is executed in accordance with results of the three preceding tasks and an additive color amount data INT. Judgement of EXIT is executed after then in order to judge whether or not is necessary to repeat the main loop again. In case EXIT=I, the main loop comes to an end.

Fig. 8(A) is a flow chart of a routine for the window specifying working of Fig. 7 in which the flag W is sequentially checked, and Fig. 8(B) is flow chart showing details of a step of window W=0 judging operation of Fig. 8(A).

Fig. 9(A) shows a flow chart of a color palette task executing routine. Referring to Fig. 9(A), at first absolute co-ordinates (X, Y) are converted into local co-ordinates ($X_L$, $Y_L$) within the color platte window. Then, a color number CC of a corresponding color palette is selected in accordance with the local co-ordinates ($X_L$, $Y_L$). A flow chart of a routine for selection of a color number CC is shown in Fig. 9(B). The color number CC is indicated by

$$CC= \frac{X_L}{n} + \frac{Y_L}{n} m.$$

Here, n is a source size, and m is a palette number in the X direction. Fig. I0(A) is a flow chart of a function menu task executing routine. In the routine of Fig. I0)A), similarly to the routine of Fig. 9(A), absolute co-ordinates are first converted into different local co-ordinates, and then a function njmber CF indicative of a sort of a function is specified. Calculation for specifying CF is illustrated in Fig. I0(B).

Fig. II(A) is a flow chart of a pen size determining task executing routine. In the routine of Fig. II(A), similarly to the routine of Fig. 9(A), absolute co-ordinates are first converted into local co-ordinates, and then an index BS indicative of a radius or size (brush) of a pen is specified. Calculation for specifying BS is illustrated in Fig. II(B).

Fig. I2 is a flow chart of a working task executing routine. In the routine of Fig. I2, similarly to the routine of Fig. 9(A), absolute co-ordinates (X, Y) are converted into local co-ordinates ($X_L$, $Y_L$) within the worked graphic image window 20. ($X_L$, $Y_L$) indicate a location of a dot of a graphic image which is to be worked. Subsequently, in accordance with a value of the index CF specified in the function menu task, a working such as painting (CF=0), brushing (CF=I) or chalking (CF=2) is executed.

Now, flow charts of routines for execution of such various functions (workings) from CF=0 to CF=II will be described. Fig. I3 shows a flow chart of a painting routine, and the painting routine will be described in connection with a diagrammatic representation of Fig. I4 showing a graphic image memory within the working graphic image window. Before starting, parameters of the flag CF=0, the palette color number CC - (corresponding to a ratio among amounts ($R_C$, $G_C$, $B_C$) of the three primary colors to be mixed), the pen size BS and the additive color rate INT have been determined during execution of respective preceding tasks. At first, a circle 26 having the radius BS is drawn around the co-ordinates ($X_L$, $Y_L$) selected in the worked graphic image window (refer to Fig. I4). Data of picture elements, that is, dots contained within the circle 26 will be hereafter processed collectively. To this end, a square 27 in which the circle 26 is inscribed is determined such that it has an apex at ($X_C$, $Y_C$). Beginning with the reference point thus determined by - ($X_C$, $Y_C$), picture clements within the square 27 are selected one by one by rester scanning. Such scanning is effected by incrementing X and Y counters. Thus, it is judged whether or not one after another picture element is contained in the circle, and where it is within the circle, painting is executed for the picture element. When scanning within the square 27 is completed, the painting working to be executed by a single input by the pen is ended. Then, if the pen is moved to any other location, painting is executed from the beginning again. Fig. I5 shows a flow chart of a routine for executing painting of a single picture element. The routine of Fig. I5 will be described in connection with a diagrammatic representation of Fig. I6 showing the graphic image memory. At first, three primary color data ($R_S$, $G_S$, $B_S$) are read out from a caell within a source graphic image area 28 of the graphic image memory having an address of the co-ordinates ($X_C$, $Y_C$) of a dot to be worked. Then, three color data ($R_C$, $G_C$, $B_C$) of a color to be colored are read out as parameters from a menu area 29 of the graphic image memory. Simultaneously, an additive color rate INT is read out. Then, calculation of an equation (I) below is executed for each of the three primary colors in order to obtain color data ($R_T$, $G_T$, $B_T$) of the three primary colors after working.

$$R_T = \frac{R_S(100-INT) + R_C \cdot INT}{100} \quad \ldots\ldots\ldots\ldots (1)$$

(while the equation (I) above provides for calculation for the red color, calculation for the two other primary colors is similar to this.)

The dot color data ($R_T$, $G_T$, $B_T$) thus obtained are then written into cells of an address ($X_C$, $Y_C$) within a working (target) graphic image area 30 of the graphic image memory. Here, where the additive color rate INT is 100%, the dot is completely painted with the color of the designated color palette, but if the additive color rate INT is 50%, then the dot is painted with a color of a mixture of equal amounts of the original color and the color of the designated color palette.

Fig. 17 shows a flow chart of a brushing routine. Since the brushing routine is similar to the painting routine, description will be given only of a difference, that is, an equation (2) in a routine for executing brushing of a single picture element. This also applies to flow charts for other functions shown in Figs. 18 to 22.

Flow chart of a Brushing Routine of Fig. 17 Equation (2)

$$R_T = \frac{R_T'(100-INT) + R_C \cdot INT}{100}$$

Here, $R_T'$ is used instead of $R_S$ in the equation (I) for painting. $R_T'$ is a color data of a worked graphic image before brushing.Accordingly, $R_T$ can be renewed by repetitive brushing, and after all, this corresponds to lap painting.

Flow chart of a Chalking Routine of Fig. 18 Equation (3)

$$R_T = \frac{R_S(100-INT) + R_C \cdot INT}{100}$$

(Here, ($X_C$, $Y_C$ ) are selected from a table of random numbers.) The equation (3) is the same as the equation (I) above for painting, but here, only when the co-ordinates ($X_C$, $Y_C$) of an object dot are selected at random from a table of random numbers, coloring is executed. Thus, random tiling is performed.

Flow chart of a Washing Routine of Fig. 19 Equation (4)

$$R_T = \frac{R_C \times GL}{EE}$$

Provided, however,

$$G_L = \frac{AA \times R_T' + BB \times G_T' + CC \times B_T'}{DD}$$

(here, AA, BB, CC, DD and EE are constants.) GL represents a brightness (tone) of a dot of the precedingly worked graphic image. Accordingly, GL is a white-black data, and this is multiplied by the color data $R_C$ of the selected color palette in order to restore a flesh color.

Flow Chart of a Copying Routine of Fig. 20 Equation (5)

$$R_T = \frac{R_T'(100\text{-}INT) + R_P \cdot INT}{100}$$

Here $R_P = R_P (X_C + X_{OFF}, Y_C + Y_{OFF})$. $R_P$ is a color data of a dot spaced by ($X_{OFF}$ , $Y_{OFF}$) from the coordinates ($X_C$, $Y_C$) of the object dot and is moved with the fixed rate INT to the dot ($X_C$, $Y_C$).

Flow Chart of a Mixing Routine of Fig. 2l Equation (6)

$$R_T = \frac{R_T'(100\text{-}INT) + R_M \cdot INT}{100}$$

Here,

$$R_M = \frac{R_T'(X_{C+1}, Y_C)+R_T'(X_{C-1}, Y_C)+R_T'(X_C, Y_{C+1})+R_T'(X_C, Y_{C-1})}{4}$$

$R_M$ is thus obtained by averaging color data of four dots located horizontally and vertically adjacent the object dot ($X_C$, $Y_C$) and adding a resulted data of such averaging with the fixed rate INT to $R_T'$ ($X_C$, $Y_C$). As a result, dispersed colors are uniformed.

Flow Chart of a Frasing Routine of Fig. 22 Equation (7)

$$R_T = \frac{R_T'(100\text{-}INT) + R_S \cdot INT}{100}$$

Now, if INT = l00%, then $R_T'$ is completely replaced by the color $R_S$ of the original graphic image. This means erasing.

By the way, the functions described hereinabove with reference to Figs. l3 to 22, that is, painting, brushing, chalking, washing, copying, mixing and erasing, are all basic functions for make-up simulation.

However, in order to make the present make-up simulation more convenient, additional functions may be provided. Some examples will be listed below, but since they will be apparent from respective flowcharts and schematic illustrations therefor, detailed description are omitted herein.

As to a mask producing function, a flow chart and a schematic illustration of the function are shown in Figs. 23 and 24, respectively.

A color changing function will become apparent from Figs. 25 and 26. A mask pattern is colored by the function. A scaling function will be apparent from Figs. 27 and 28.

A mirroring function is illustrated in Figs. 29 and 30.

A composing function is illustrated in Figs. 3l and 32. This is suitably used for co-ordination such as composition of a mask.

As apparent from the foregoing description, according to the present invention, a make-up simulator processes a graphic image of a face of an object person with functions or workings based on an actual make-up by means of an operating processing circuit of a high speed and a large capacity and thus outputs a worked graphic image. Accordingly, following effects can be attained.

Since revision, changing of a color and composition are effected based on a procedure of a make-up, very accurate simulation can be attained.

Since processing of a graphic image is performed at a high speed, the make-up simulator is suitable for demonstration at the shop-front.

Since a non-interlaced output method is used, an output picture provides no flickering and is bright.

.Since a large capacity graphic image memory is employed, a very large number of colors can be reproduced and hence a delicate color tone can be attained.

Since a pressure sensitive stylus pen is used, the make-up simulator is compatible with software for natural touch such as brushing.

Since all necessary operations can be done with menus on the picture without using a CRT terminal or the like, the operability is high.

Since the input layout is of the multi-window type, a picture layout easy to use can be attained.

Since the make-up simulator involves a brushing function based on a precedure of an actual make-up, it is suitable for a make-up.

The composing function and the color changing function can be utilized for co-ordination.

Having now fully described the invention, it will be apparent to one of ordinary skill in the art that many changes and modifications can be made thereto without departing from the spirit and scope of the invention as set forth herein.

## Claims

I. A make-up simulator, comprising a color image pickup device for converting an original graphic image of a face of an object person into input video signals, a color display unit for reproducing worked output video signals as a worked graphic image of a face, a video signal input/output module connected to said color image pickup device and said color display unit for converting input video signals into dot data and for converting worked dot data into output video signals, a graphic image memory connected to said video signal input/output module by way of a dot data bus for storing dot data therein, a graphic image memory controller connected to said graphic image memory by way of a memory bus for controlling reading out of and writing into said graphic image memory, a co-ordinate input device for inputting co-ordinates of a working location and a working condition of a graphic image of a face, and a graphic image processing circuit coupled to said graphic image memory controller and said co-ordinate input device by way of a system bus for receiving dot data from said graphic image memory controller in response to inputted working location co-ordinates, selectively executing a working of painting, brushing, chalking, washing, copying, mixing or erasing of dot data in accordance with the inputted working condition and then delivering dot data thus worked to said graphic image memory controller and for controlling indication on said display unit of a location of co-ordinates inputted from said co-ordinate input device.

2. A make-up simulator according to claim I, wherein said color display unit is a color monitor TV set of the non-interlacing type.

3. A make-up simulator according to claim I, wherein said color display unit displays an original graphic image of a face and a worked graphic image of the face in a juxtaposed relationship thereon.

4. A make-up simulator according to claim I, wherein said graphic image memory includes a large capacity semiconductor memory device.

5. A make-up simulator according to claim I, wherein said graphic image processing circuit includes a 32-bit processor therein and executes a high speed calculating operation.

6. A make-up simulator according to claim I, wherein said co-ordinate input device includes a tablet and a stylus pen of the pressure sensitive type.

7. A make-up simulator according to claim 6, wherein said tablet is divided into a function menu window for inputting contents of a working therethrough, a window for specifying a size of a pen therethrough, a color pallet window for designating therethrough a color to be colored, and a window for specifying an amount of coloring therethrough, and said windows are displayed on said display unit.

8. A make-up simulator according to Claim I, wherein said graphic image processing circuit additionally performs production of a mask, changing of a color and composition in response to an instruction given by way of said co-ordinate input device.

# FIG. I

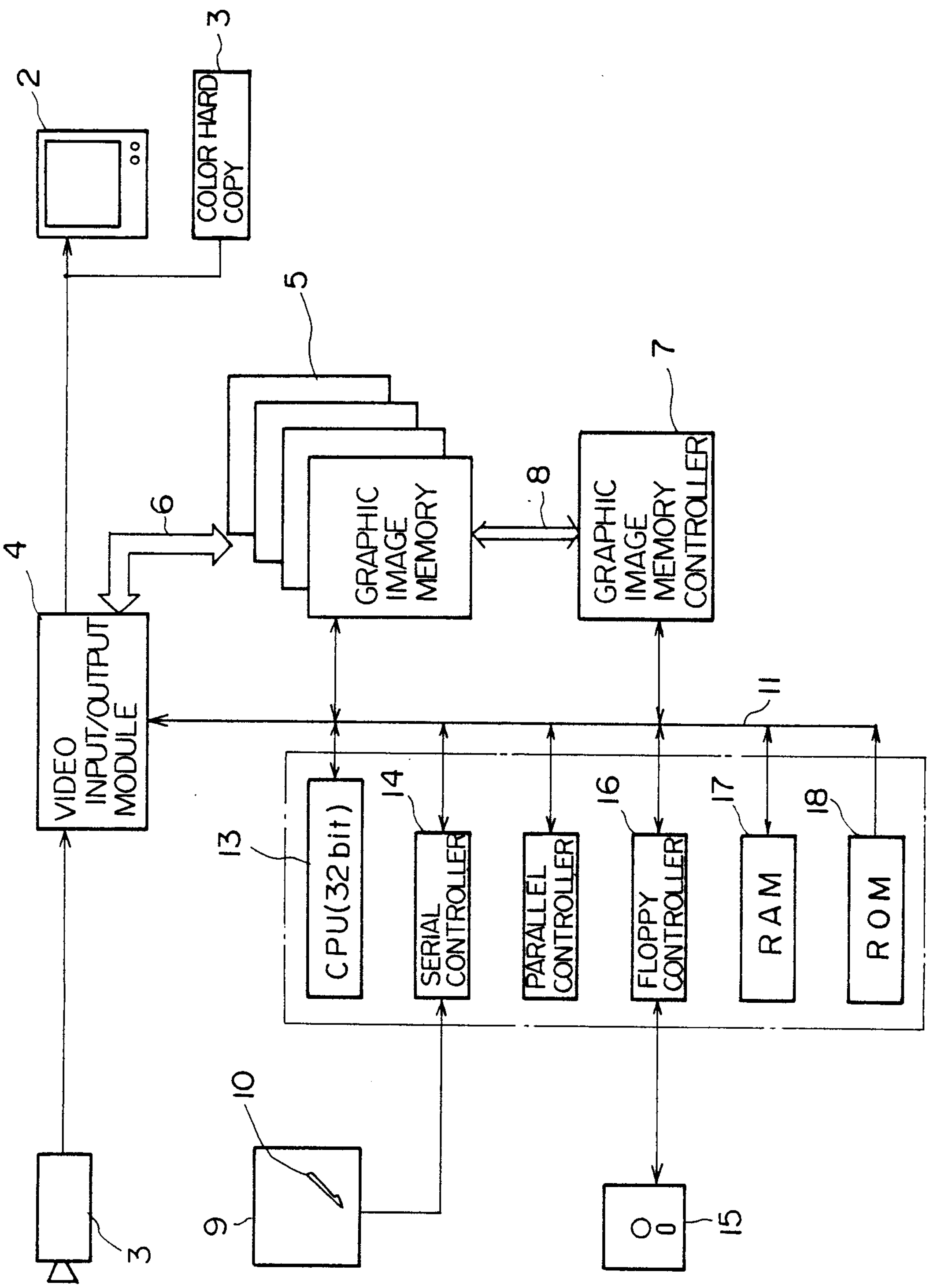

VIDEO INPUT/OUTPUT MODULE
COLOR HARD COPY
GRAPHIC IMAGE MEMORY
GRAPHIC IMAGE MEMORY CONTROLLER
CPU(32 bit)
SERIAL CONTROLLER
PARALLEL CONTROLLER
FLOPPY CONTROLLER
RAM
ROM
2
3
4
5
6
7
8
9
10
11
13
14
15
16
17
18

FIG. 2

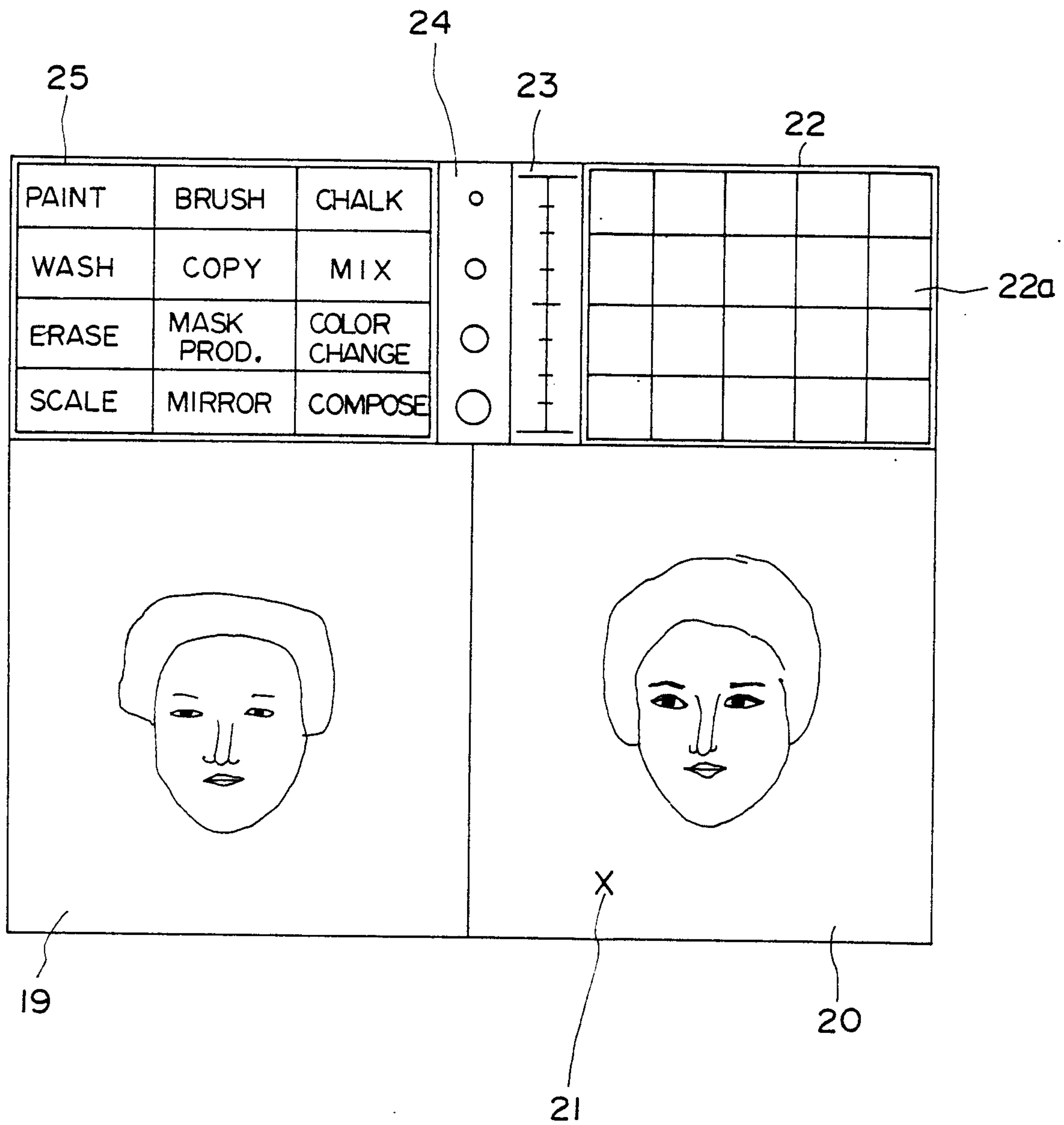
24
25
23
22
PAINT
BRUSH
CHALK
WASH
COPY
MIX
ERASE
MASK PROD.
COLOR CHANGE
SCALE
MIRROR
COMPOSE
22a
X
19
20
21

FIG. 3

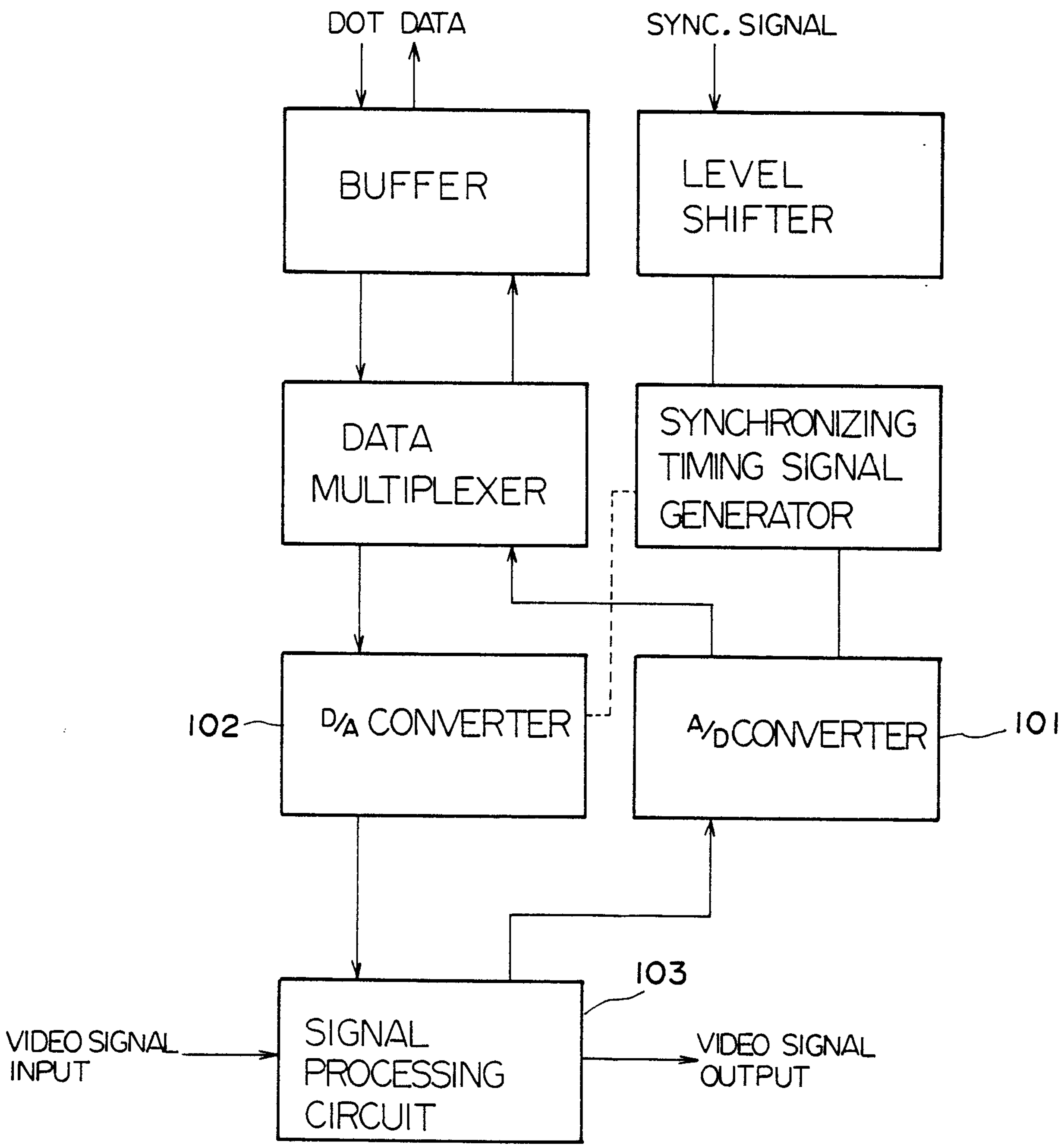

DOT DATA
SYNC. SIGNAL
BUFFER
LEVEL SHIFTER
DATA MULTIPLEXER
SYNCHRONIZING TIMING SIGNAL GENERATOR
102
D/A CONVERTER
A/D CONVERTER
101
103
VIDEO SIGNAL INPUT
SIGNAL PROCESSING CIRCUIT
VIDEO SIGNAL OUTPUT

FIG. 4

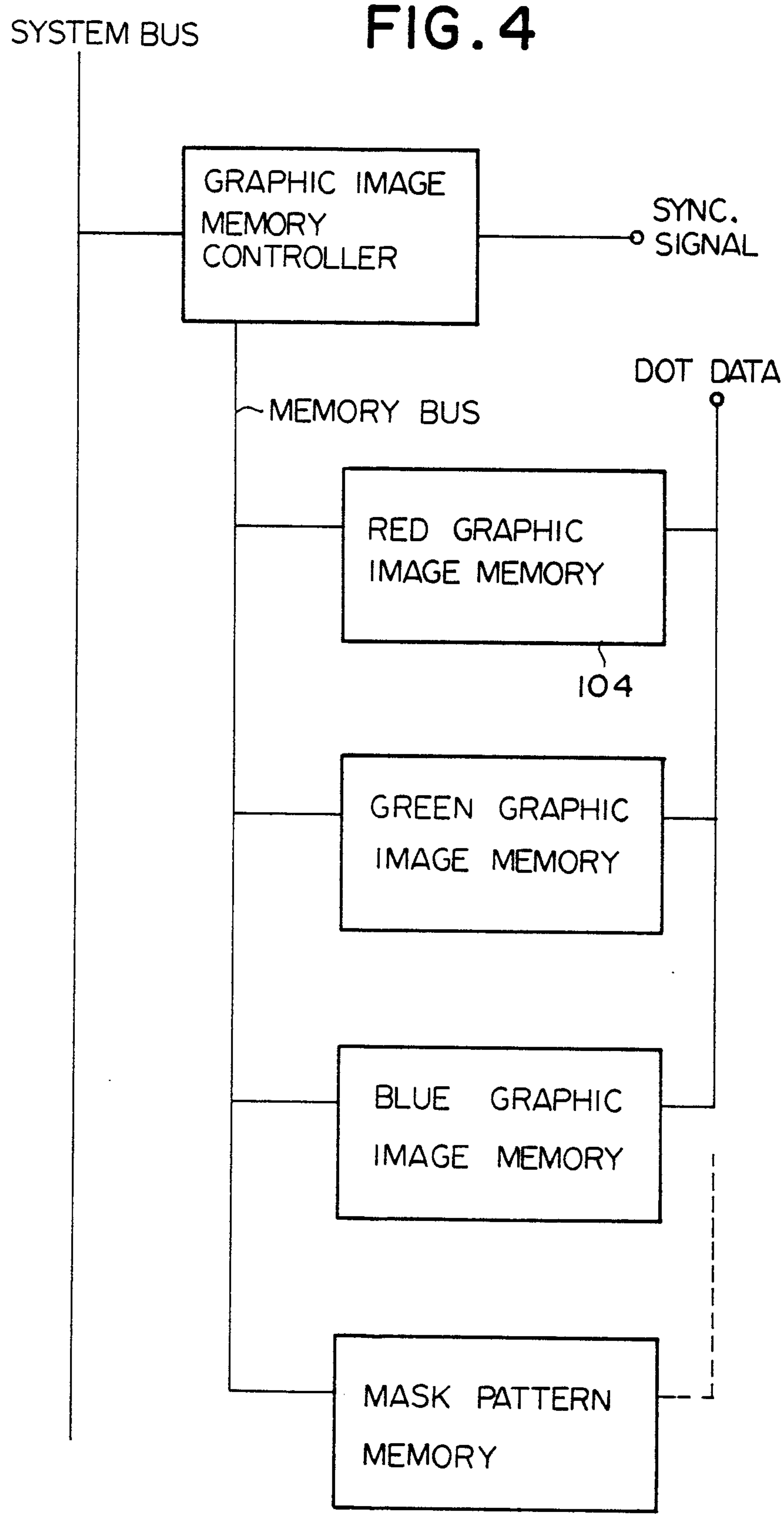
SYSTEM BUS
GRAPHIC IMAGE MEMORY CONTROLLER
SYNC. SIGNAL
MEMORY BUS
DOT DATA
RED GRAPHIC IMAGE MEMORY
104
GREEN GRAPHIC IMAGE MEMORY
BLUE GRAPHIC IMAGE MEMORY
MASK PATTERN MEMORY

FIG. 5

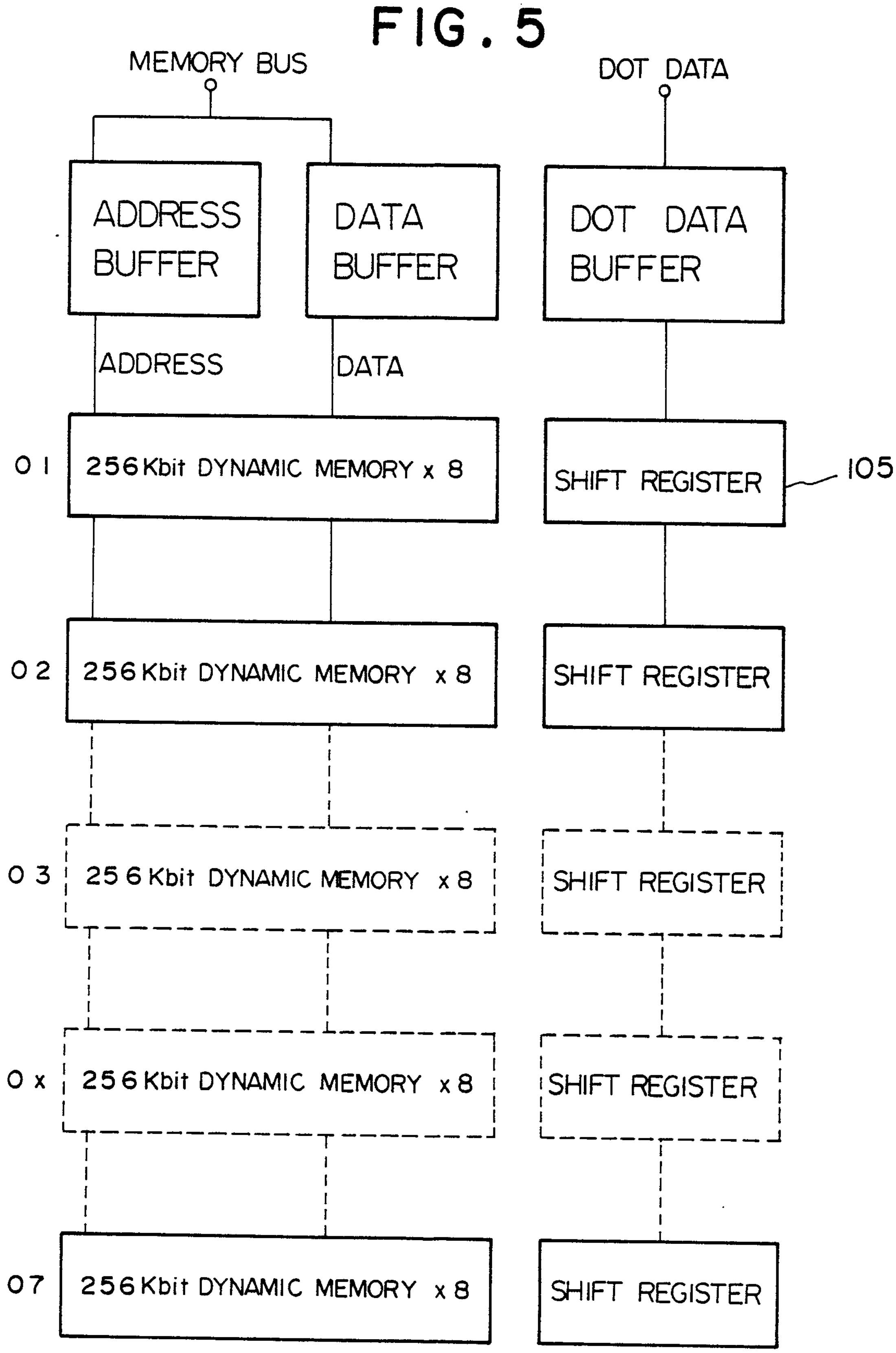
MEMORY BUS
DOT DATA
ADDRESS BUFFER
DATA BUFFER
DOT DATA BUFFER
ADDRESS
DATA
01
256Kbit DYNAMIC MEMORY x 8
SHIFT REGISTER
105
02
256Kbit DYNAMIC MEMORY x 8
SHIFT REGISTER
03
256Kbit DYNAMIC MEMORY x 8
SHIFT REGISTER
0x
256Kbit DYNAMIC MEMORY x 8
SHIFT REGISTER
07
256Kbit DYNAMIC MEMORY x 8
SHIFT REGISTER

FIG. 6

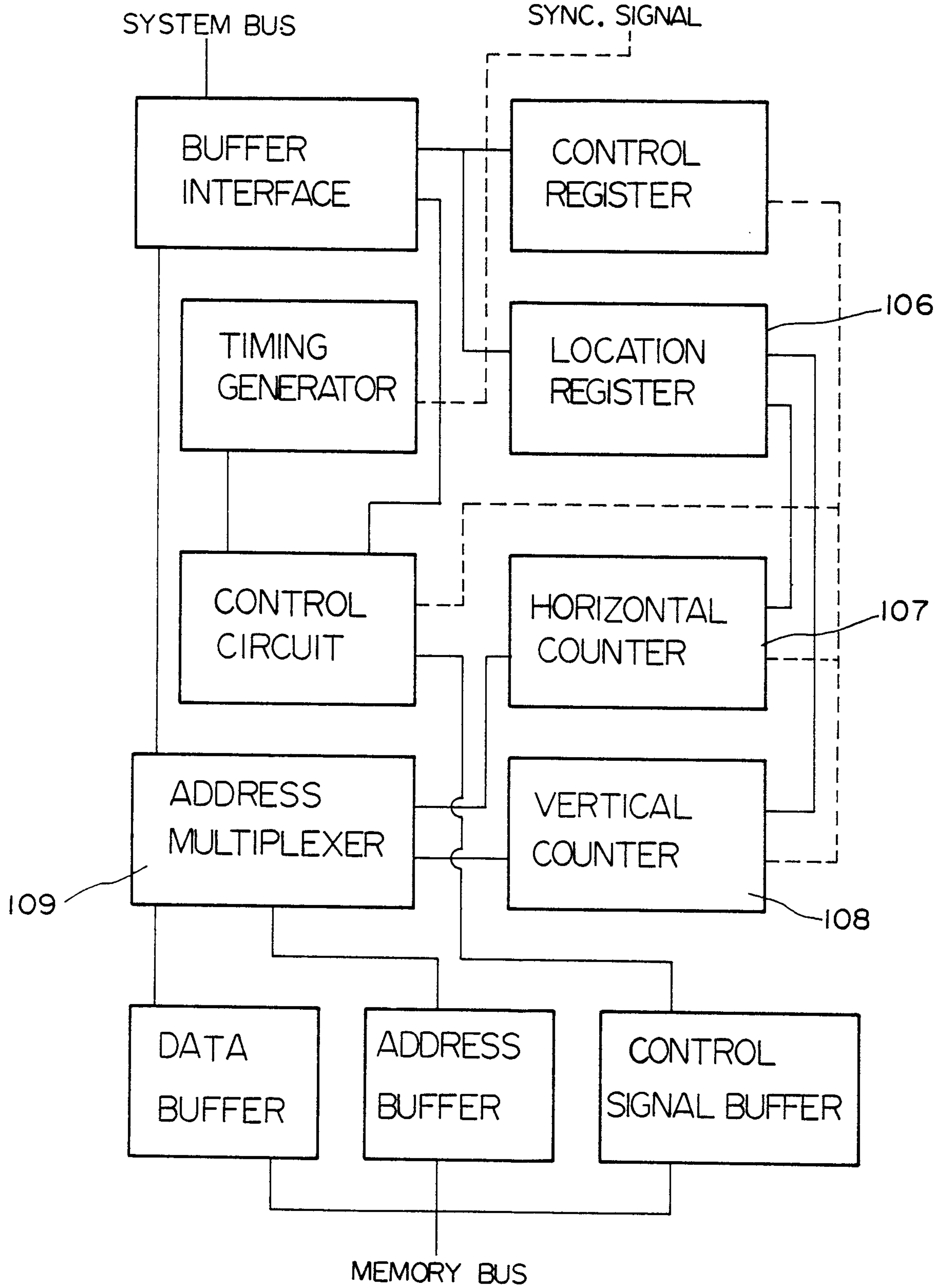
SYSTEM BUS
SYNC. SIGNAL
BUFFER INTERFACE
CONTROL REGISTER
106
TIMING GENERATOR
LOCATION REGISTER
CONTROL CIRCUIT
HORIZONTAL COUNTER
107
ADDRESS MULTIPLEXER
VERTICAL COUNTER
109
108
DATA BUFFER
ADDRESS BUFFER
CONTROL SIGNAL BUFFER
MEMORY BUS

FIG. 7

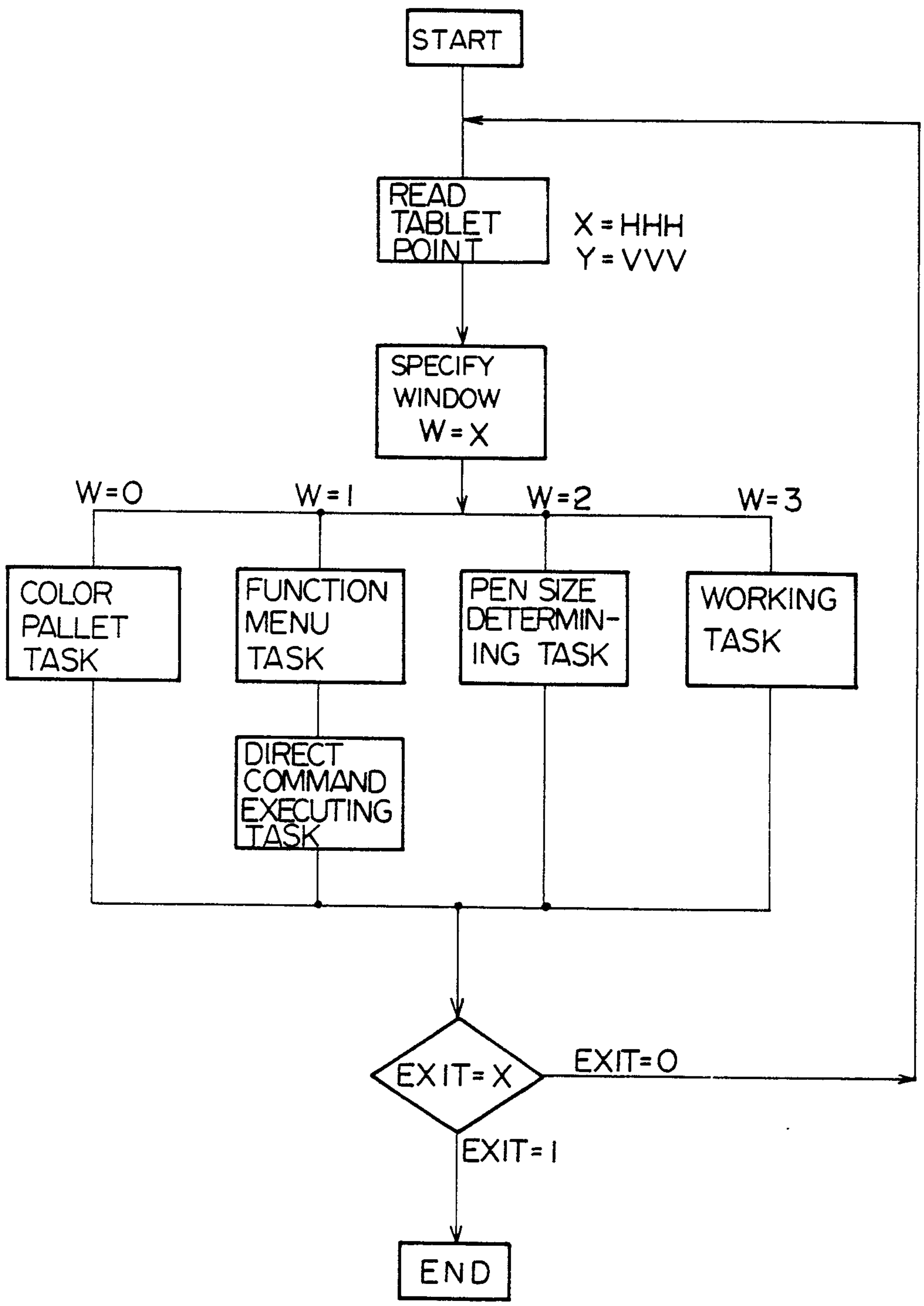
START
READ TABLET POINT
X = HHH
Y = VVV
SPECIFY WINDOW W = X
W=0
W=1
W=2
W=3
COLOR PALLET TASK
FUNCTION MENU TASK
PEN SIZE DETERMIN-ING TASK
WORKING TASK
DIRECT COMMAND EXECUTING TASK
EXIT=X
EXIT=0
EXIT=1
END

FIG. 8(A)

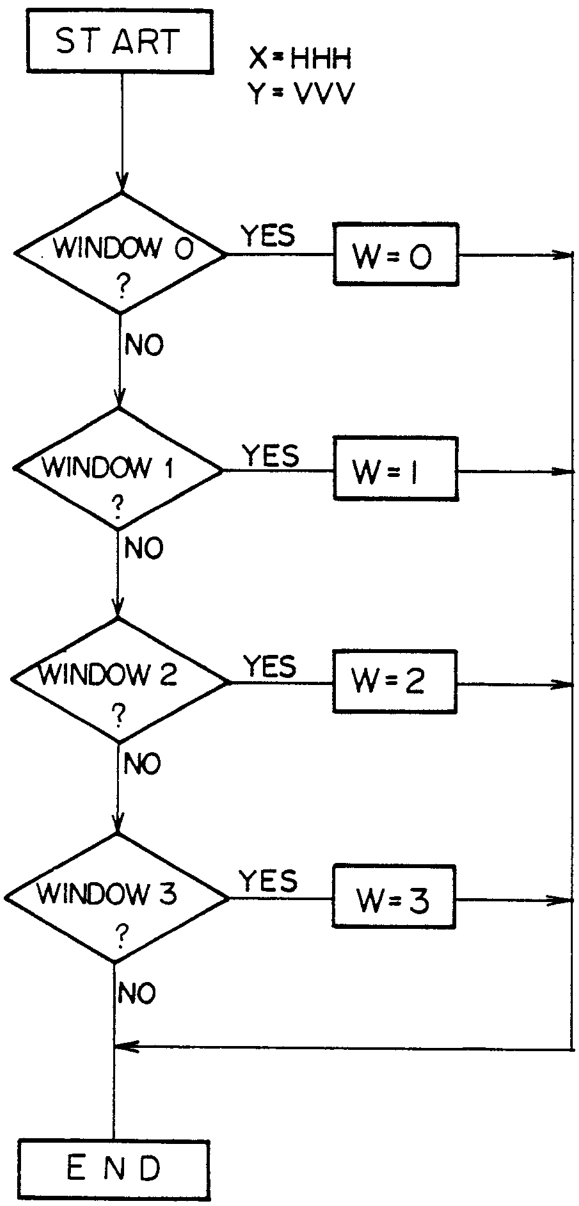
START
X = HHH
Y = VVV
WINDOW 0 ?
YES
W=0
NO
WINDOW 1 ?
YES
W=1
NO
WINDOW 2 ?
YES
W=2
NO
WINDOW 3 ?
YES
W=3
NO
END

FIG. 8(B)

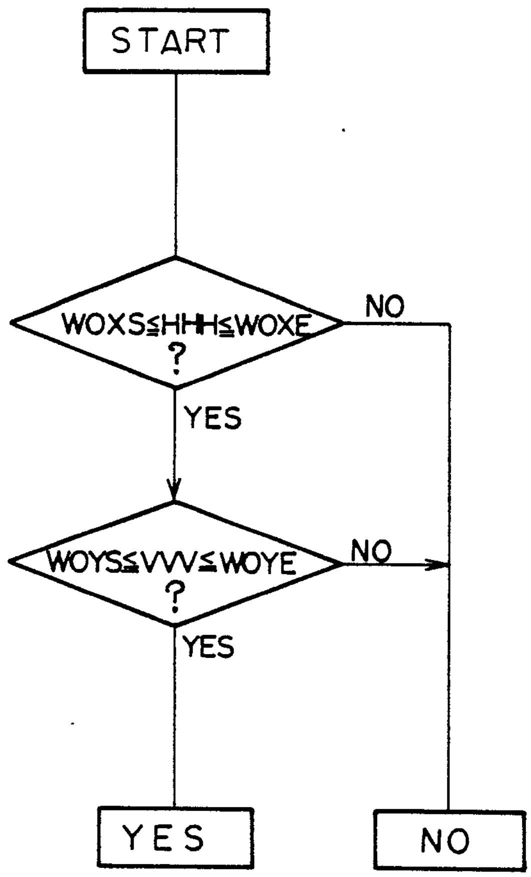
START
WOXS≦HHH≦WOXE ?
NO
YES
WOYS≦VVV≦WOYE ?
NO
YES
YES
NO

FIG.9(A)

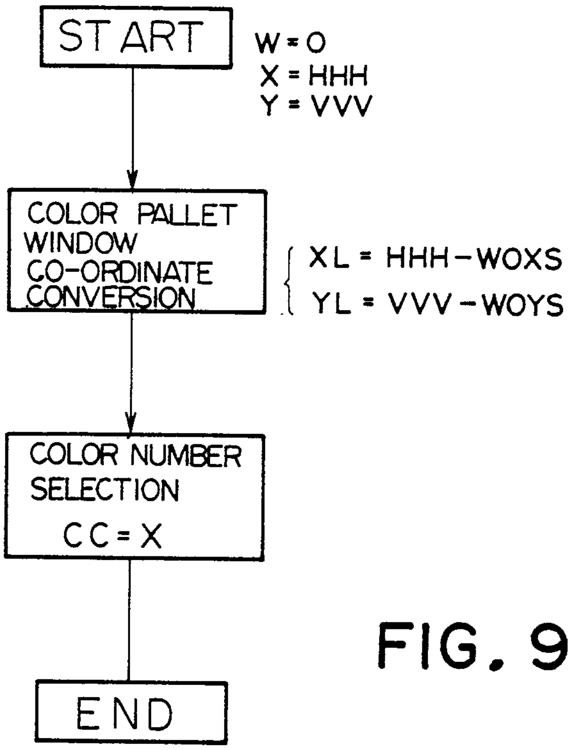
START
W = O
X = HHH
Y = VVV
COLOR PALLET WINDOW CO-ORDINATE CONVERSION
XL = HHH−WOXS
YL = VVV−WOYS
COLOR NUMBER SELECTION
CC = X
END

FIG. 9 (B)

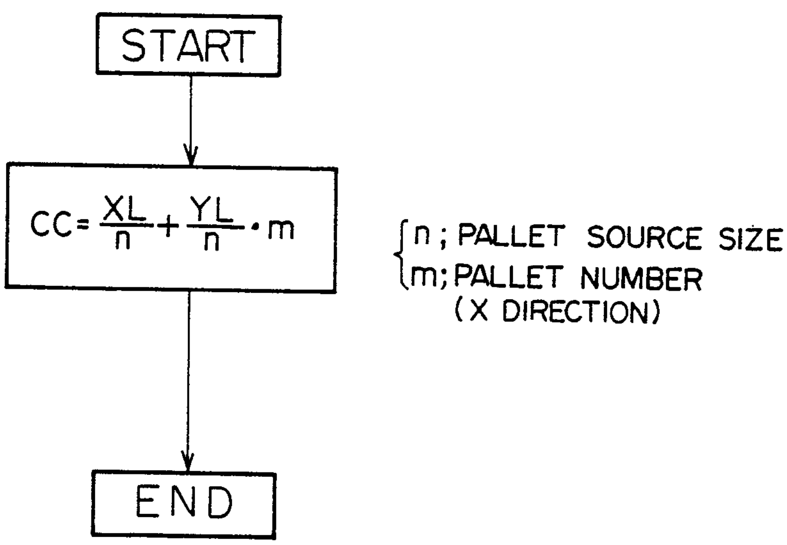
START
CC = XL/n + YL/n · m
n ; PALLET SOURCE SIZE
m; PALLET NUMBER (X DIRECTION)
END

FIG. 10 (A)

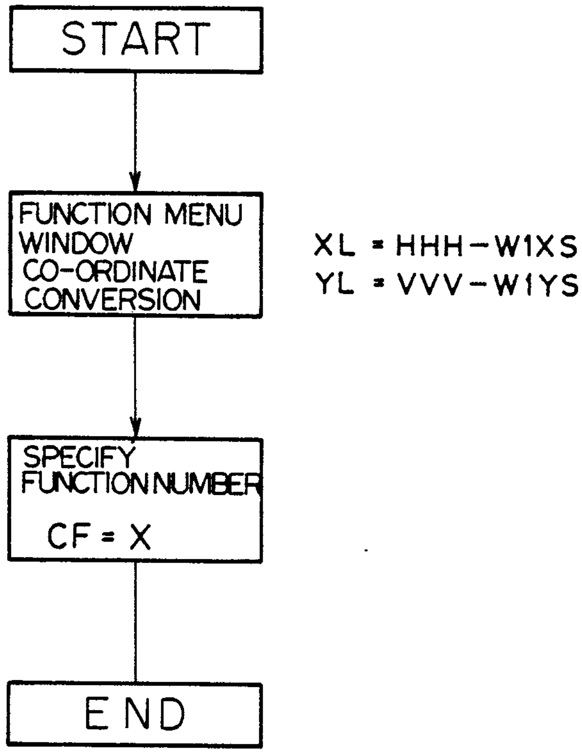


FIG. 10 (B)

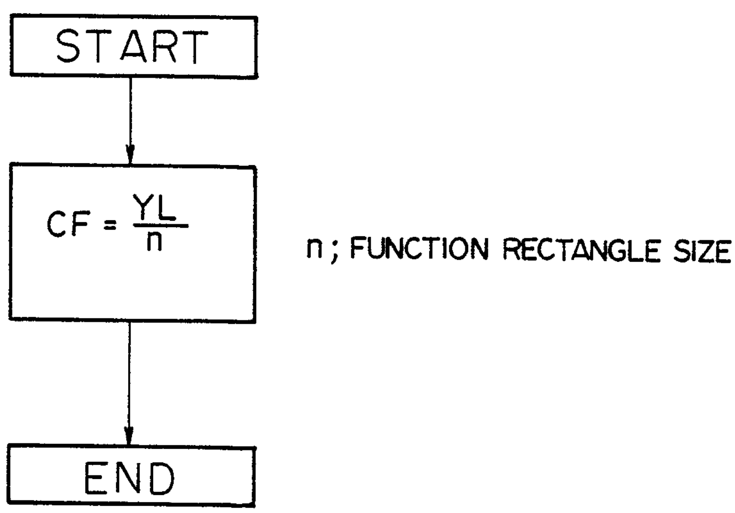

FIG. 11(A)

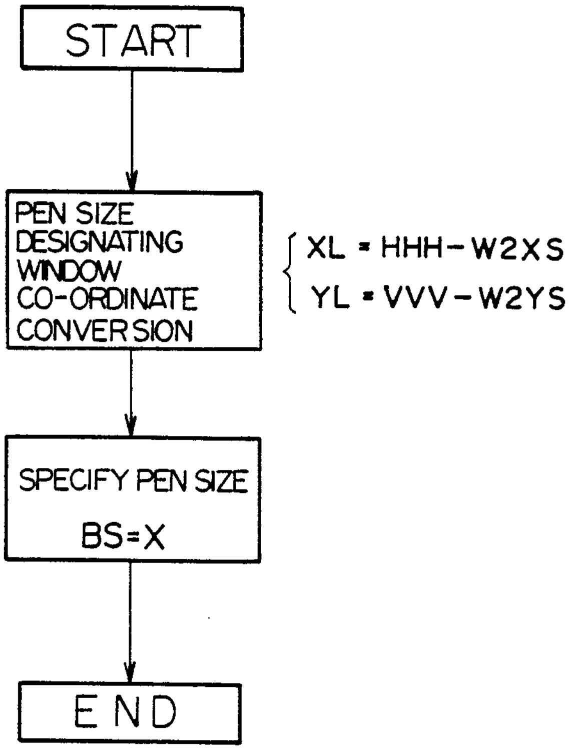


FIG. 11(B)

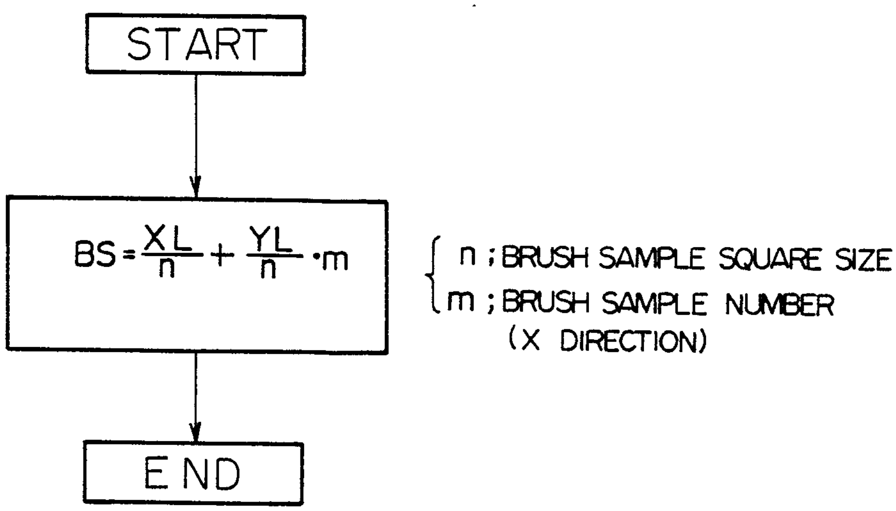

FIG. 12

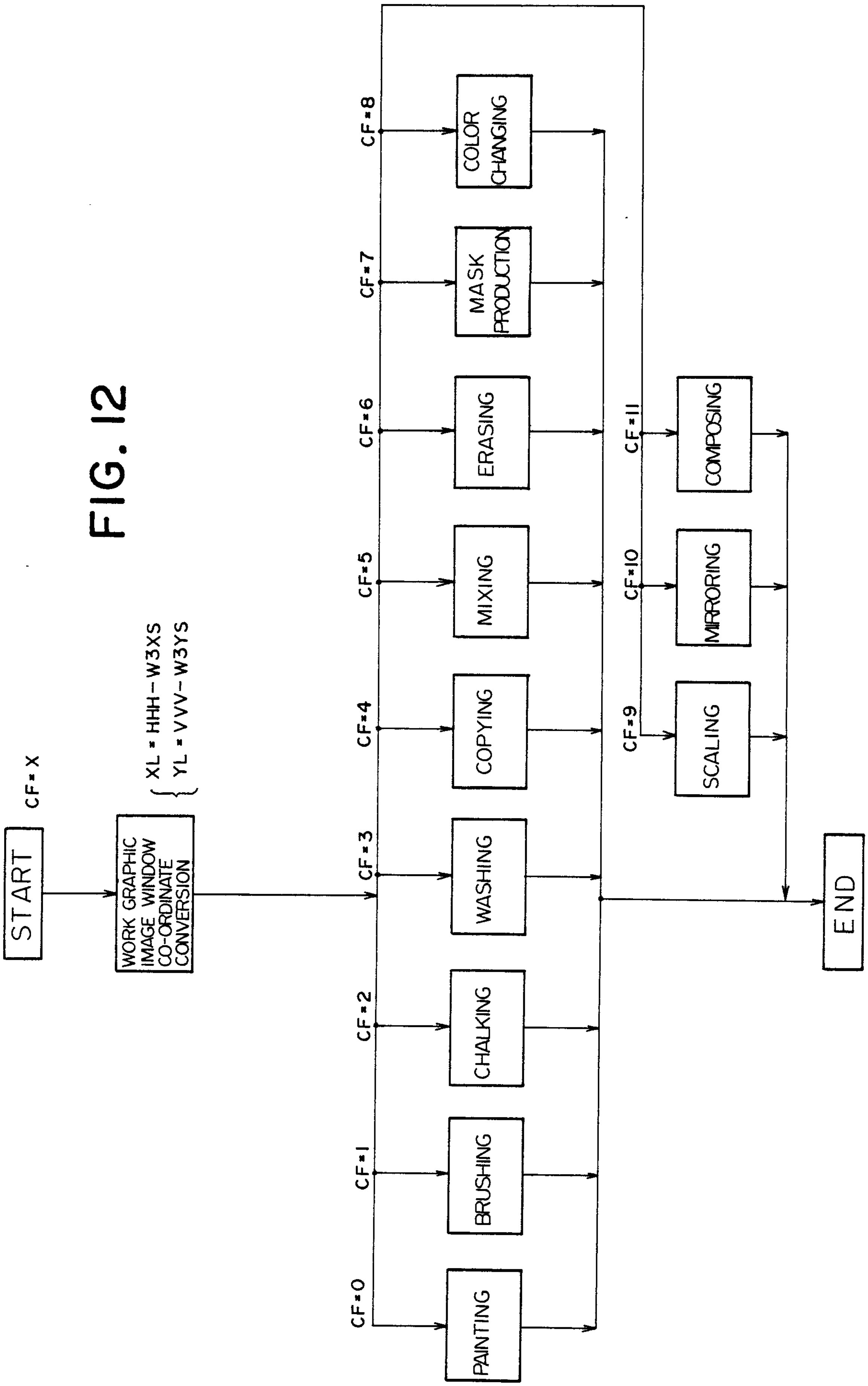

START
CF = X
WORK GRAPHIC IMAGE WINDOW CO-ORDINATE CONVERSION
XL = HHH - W3XS
YL = VVV - W3YS
CF = 0
PAINTING
CF = 1
BRUSHING
CF = 2
CHALKING
CF = 3
WASHING
CF = 4
COPYING
CF = 5
MIXING
CF = 6
ERASING
CF = 7
MASK PRODUCTION
CF = 8
COLOR CHANGING
CF = 9
SCALING
CF = 10
MIRRORING
CF = 11
COMPOSING
END

FIG. 13

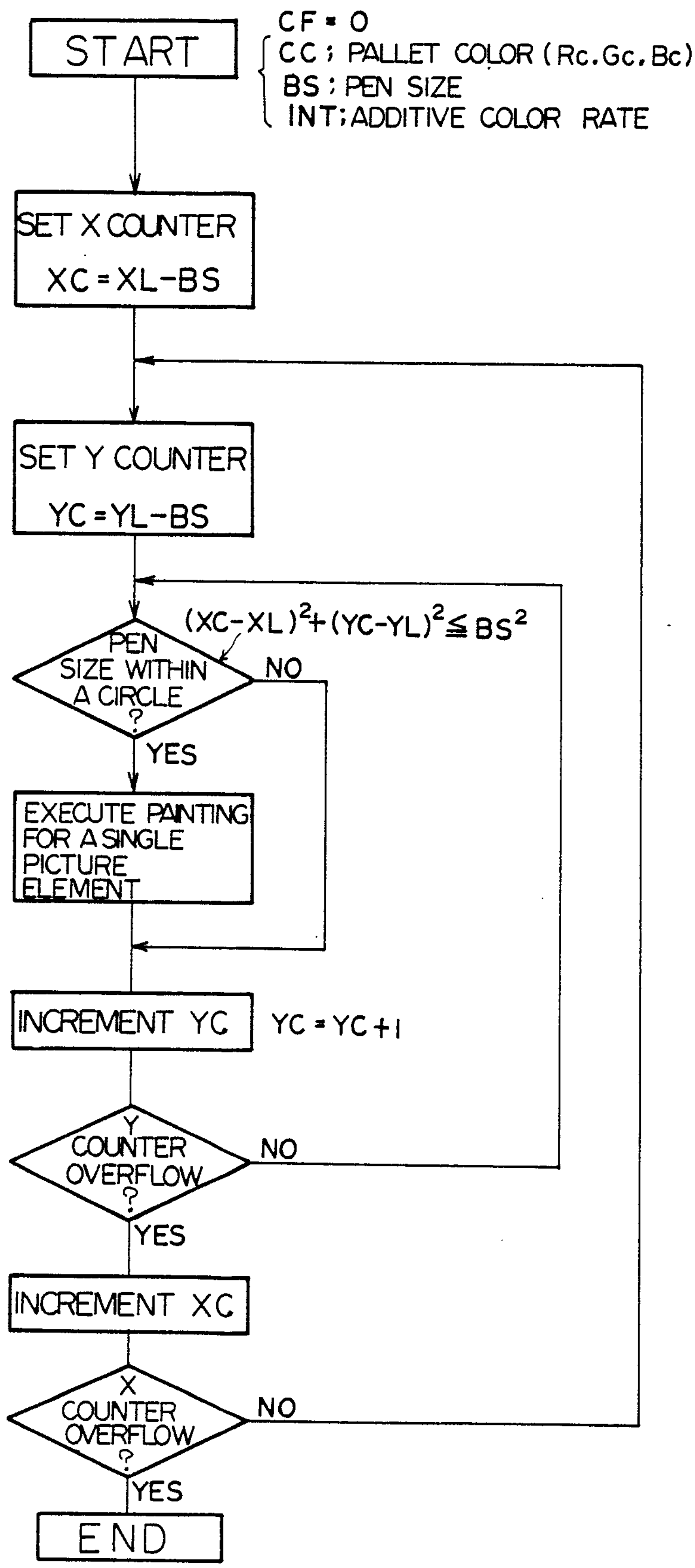
START
CF = 0
CC ; PALLET COLOR (Rc.Gc.Bc)
BS ; PEN SIZE
INT; ADDITIVE COLOR RATE
SET X COUNTER
XC = XL-BS
SET Y COUNTER
YC = YL-BS
PEN SIZE WITHIN A CIRCLE ?
(XC-XL)²+(YC-YL)²≦BS²
NO
YES
EXECUTE PAINTING FOR A SINGLE PICTURE ELEMENT
INCREMENT YC
YC = YC+1
Y COUNTER OVERFLOW ?
NO
YES
INCREMENT XC
X COUNTER OVERFLOW ?
NO
YES
END

FIG. 14

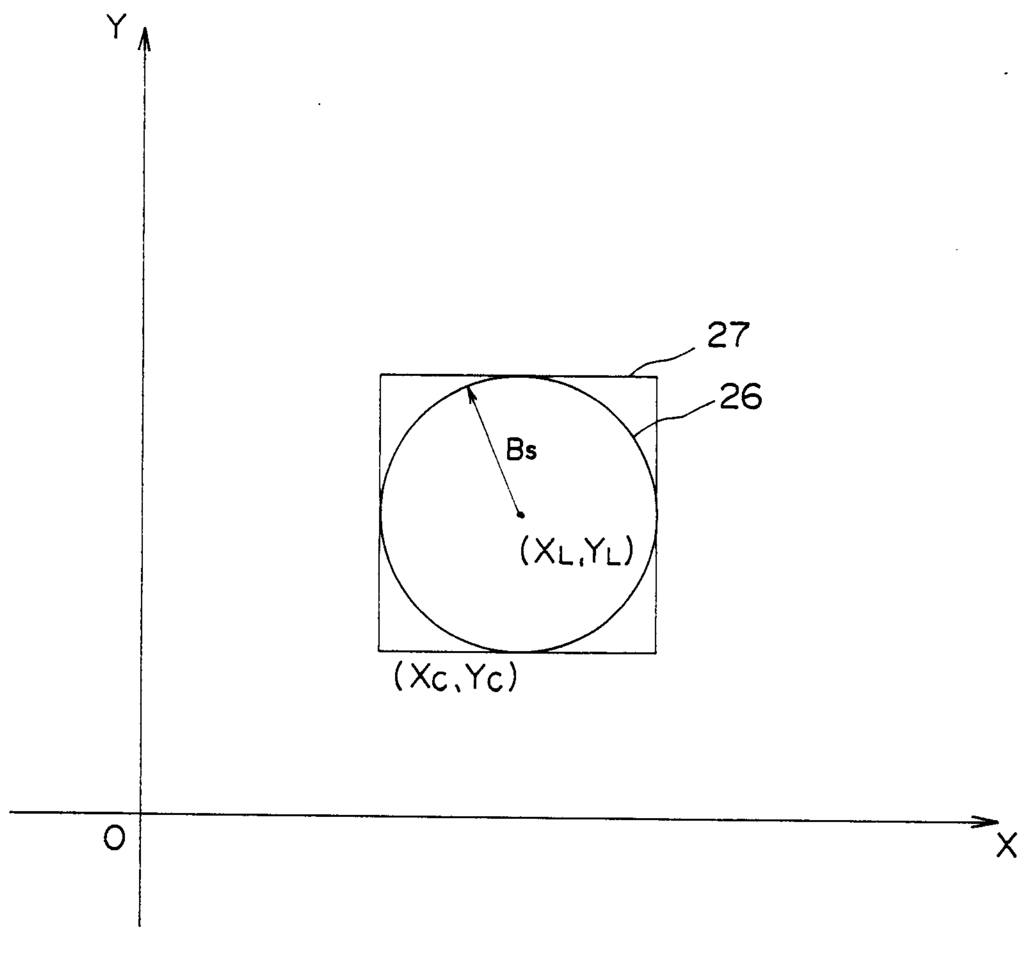

FIG. 15

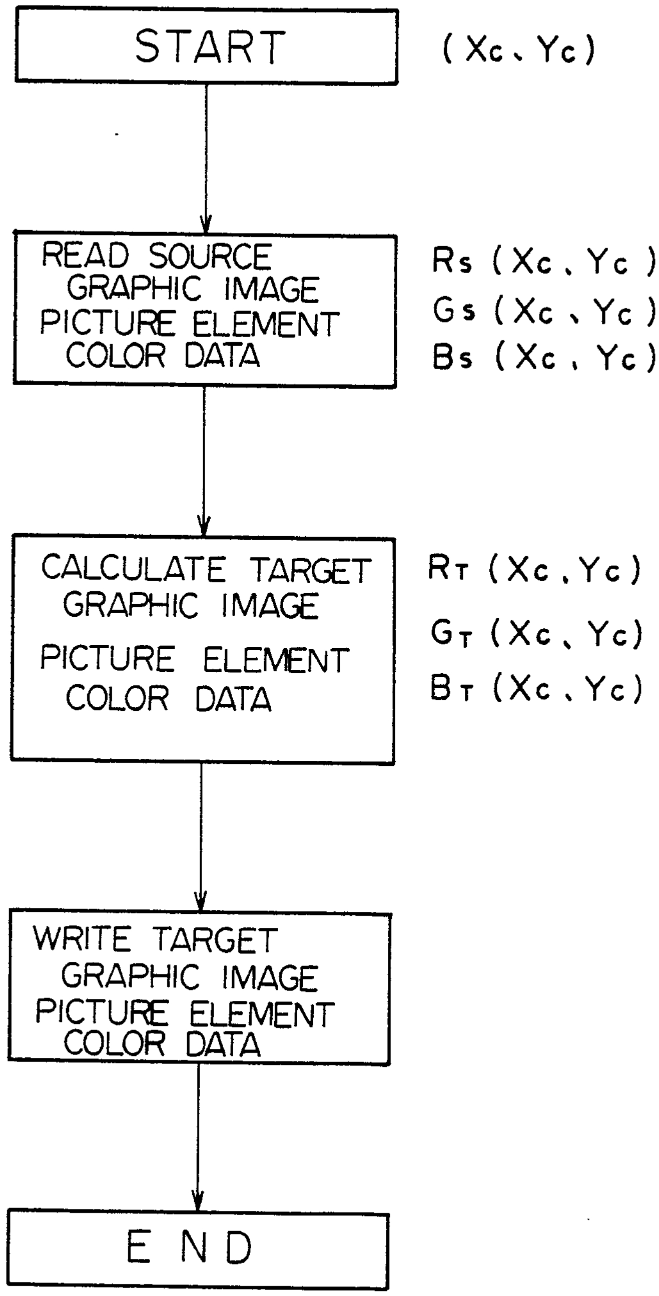
START
(Xc、Yc)
READ SOURCE GRAPHIC IMAGE PICTURE ELEMENT COLOR DATA
Rs (Xc、Yc)
Gs (Xc、Yc)
Bs (Xc、Yc)
CALCULATE TARGET GRAPHIC IMAGE PICTURE ELEMENT COLOR DATA
RT (Xc、Yc)
GT (Xc、Yc)
BT (Xc、Yc)
WRITE TARGET GRAPHIC IMAGE PICTURE ELEMENT COLOR DATA
END

FIG. 16

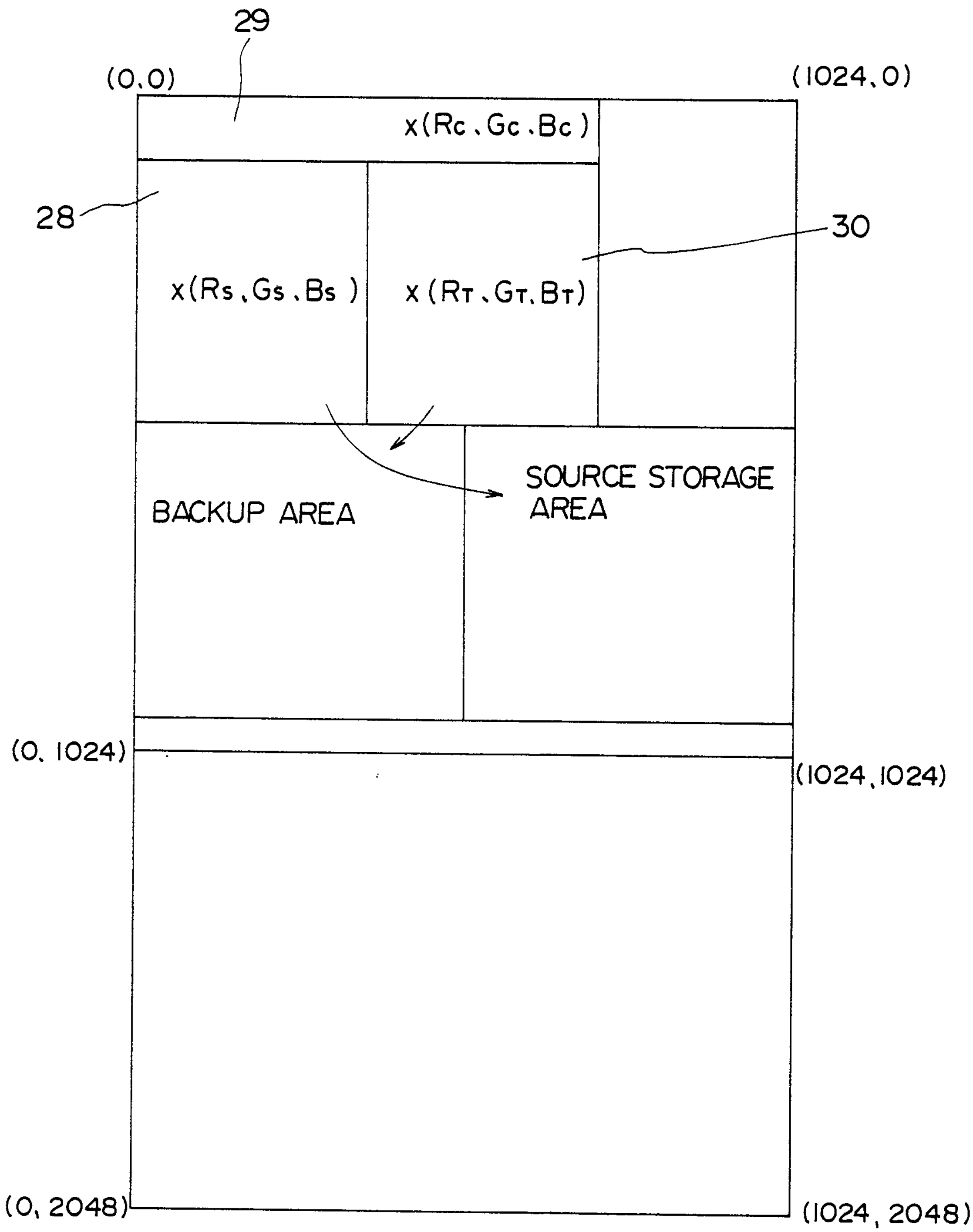
29
(0,0)
(1024,0)
x(Rc,Gc,Bc)
28
30
x(Rs,Gs,Bs)
x(RT,GT,BT)
BACKUP AREA
SOURCE STORAGE AREA
(0, 1024)
(1024,1024)
(0, 2048)
(1024, 2048)

FIG. 17

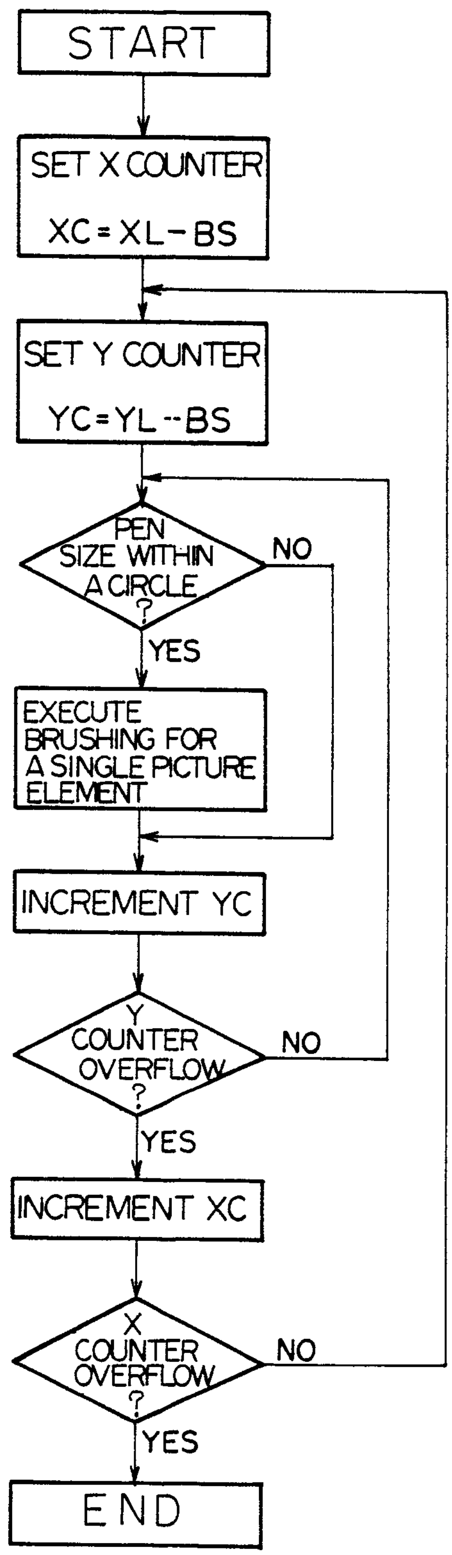
START
SET X COUNTER
XC = XL − BS
SET Y COUNTER
YC = YL −- BS
PEN SIZE WITHIN A CIRCLE ?
NO
YES
EXECUTE BRUSHING FOR A SINGLE PICTURE ELEMENT
INCREMENT YC
Y COUNTER OVERFLOW ?
NO
YES
INCREMENT XC
X COUNTER OVERFLOW ?
NO
YES
END

FIG. 18

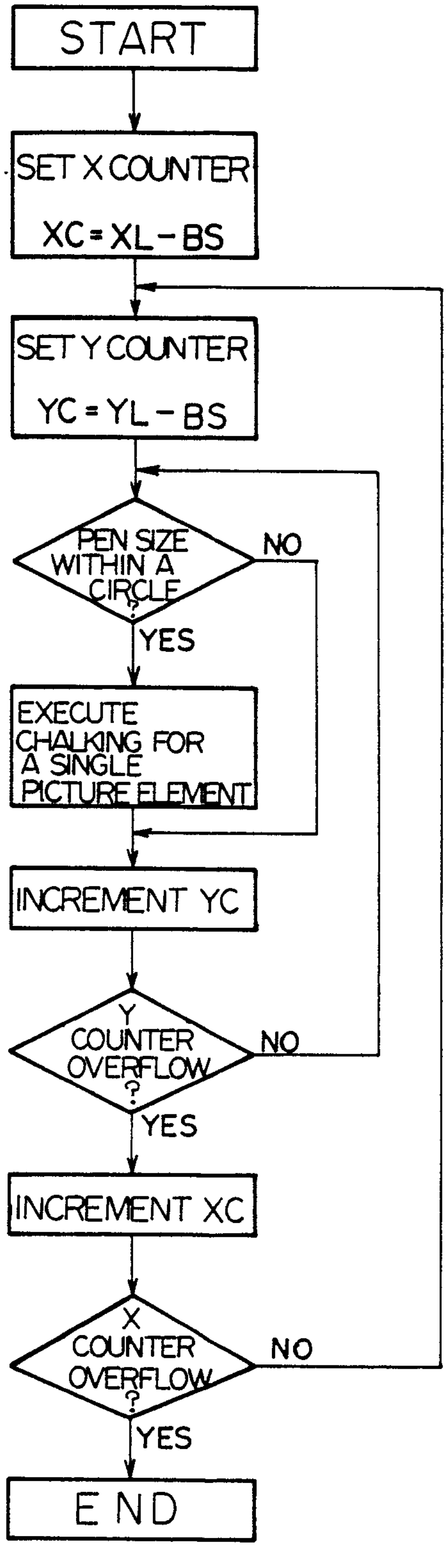
START
SET X COUNTER
XC = XL − BS
SET Y COUNTER
YC = YL − BS
PEN SIZE WITHIN A CIRCLE ?
NO
YES
EXECUTE CHALKING FOR A SINGLE PICTURE ELEMENT
INCREMENT YC
Y COUNTER OVERFLOW ?
NO
YES
INCREMENT XC
X COUNTER OVERFLOW ?
NO
YES
END

FIG. 19

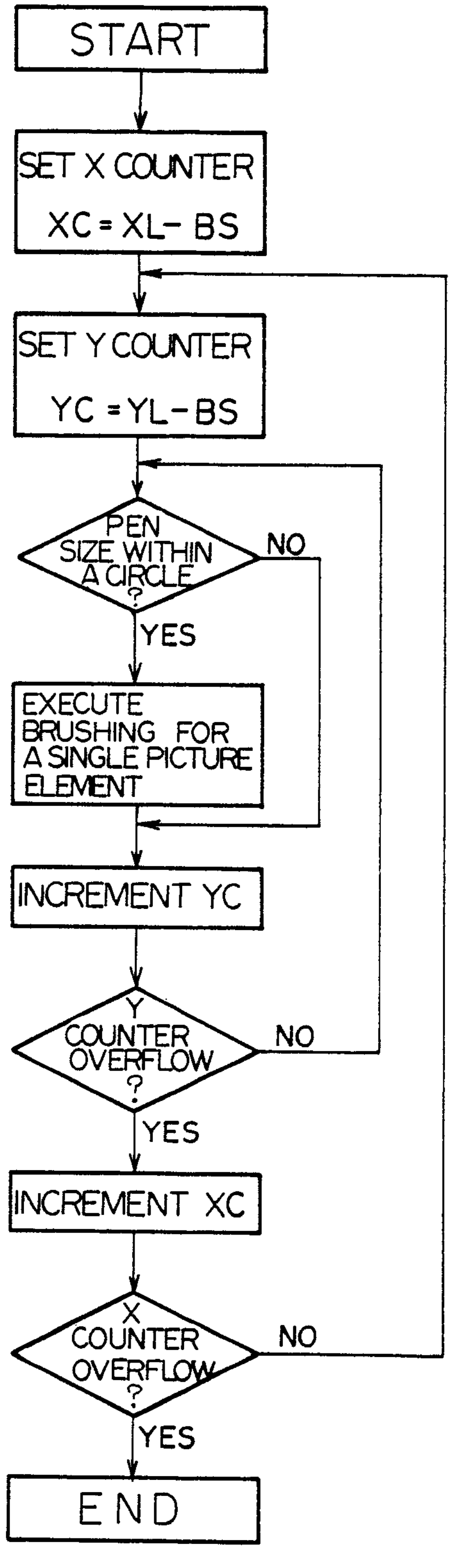
START
SET X COUNTER
XC = XL- BS
SET Y COUNTER
YC = YL-BS
PEN SIZE WITHIN A CIRCLE ?
NO
YES
EXECUTE BRUSHING FOR A SINGLE PICTURE ELEMENT
INCREMENT YC
Y COUNTER OVERFLOW ?
NO
YES
INCREMENT XC
X COUNTER OVERFLOW ?
NO
YES
END

FIG.20

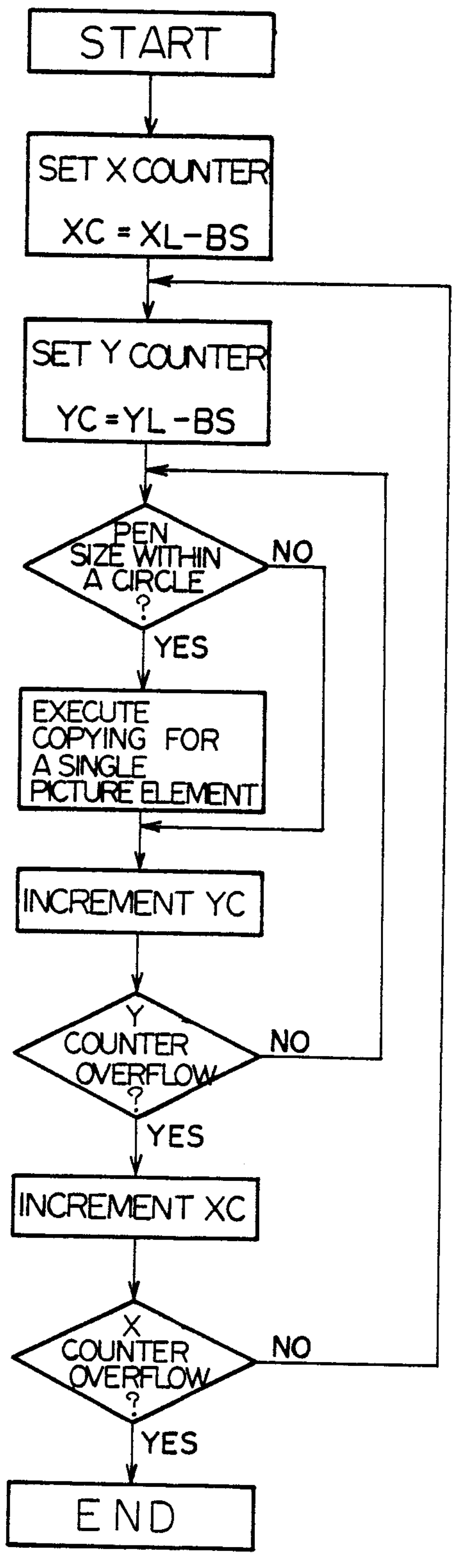
START
SET X COUNTER
XC = XL-BS
SET Y COUNTER
YC = YL-BS
PEN SIZE WITHIN A CIRCLE ?
NO
YES
EXECUTE COPYING FOR A SINGLE PICTURE ELEMENT
INCREMENT YC
Y COUNTER OVERFLOW ?
NO
YES
INCREMENT XC
X COUNTER OVERFLOW ?
NO
YES
END

FIG. 21

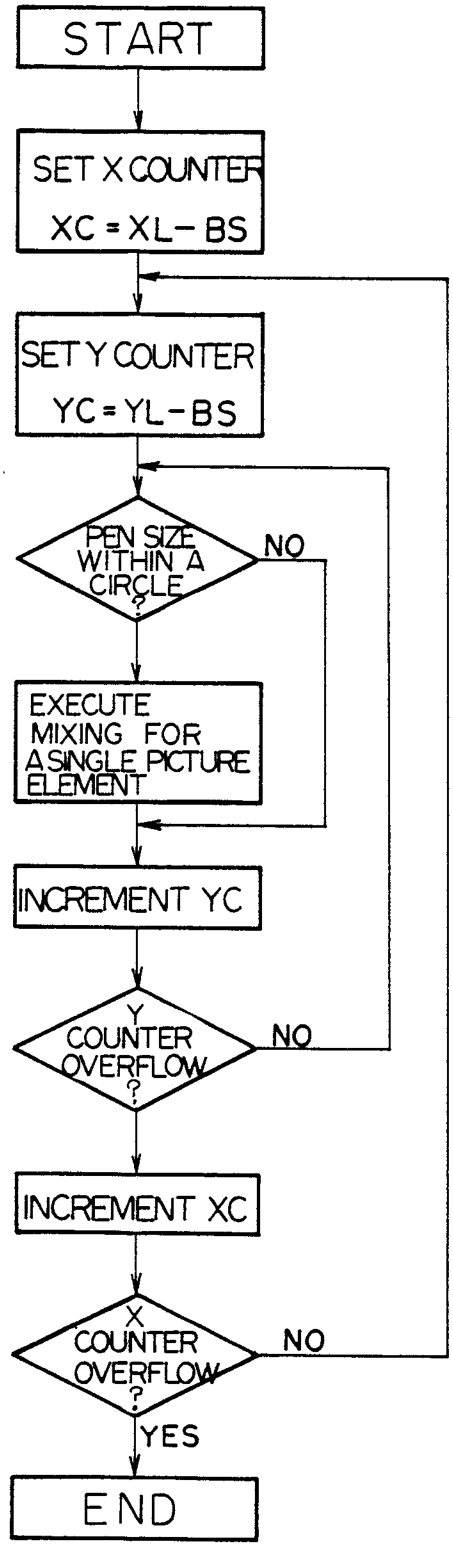
START
SET X COUNTER
XC = XL − BS
SET Y COUNTER
YC = YL − BS
PEN SIZE WITHIN A CIRCLE ?
NO
EXECUTE MIXING FOR A SINGLE PICTURE ELEMENT
INCREMENT YC
Y COUNTER OVERFLOW ?
NO
INCREMENT XC
X COUNTER OVERFLOW ?
NO
YES
END

FIG. 22

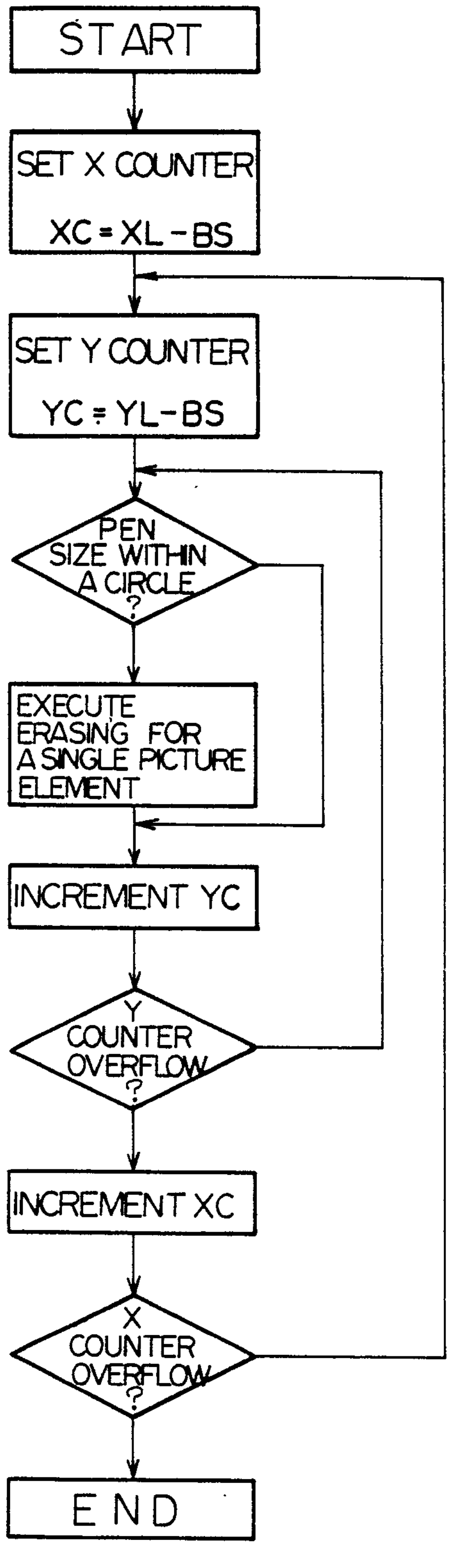

START
SET X COUNTER
XC = XL - BS
SET Y COUNTER
YC = YL-BS
PEN SIZE WITHIN A CIRCLE ?
EXECUTE ERASING FOR A SINGLE PICTURE ELEMENT
INCREMENT YC
Y COUNTER OVERFLOW ?
INCREMENT XC
X COUNTER OVERFLOW ?
END

FIG. 23

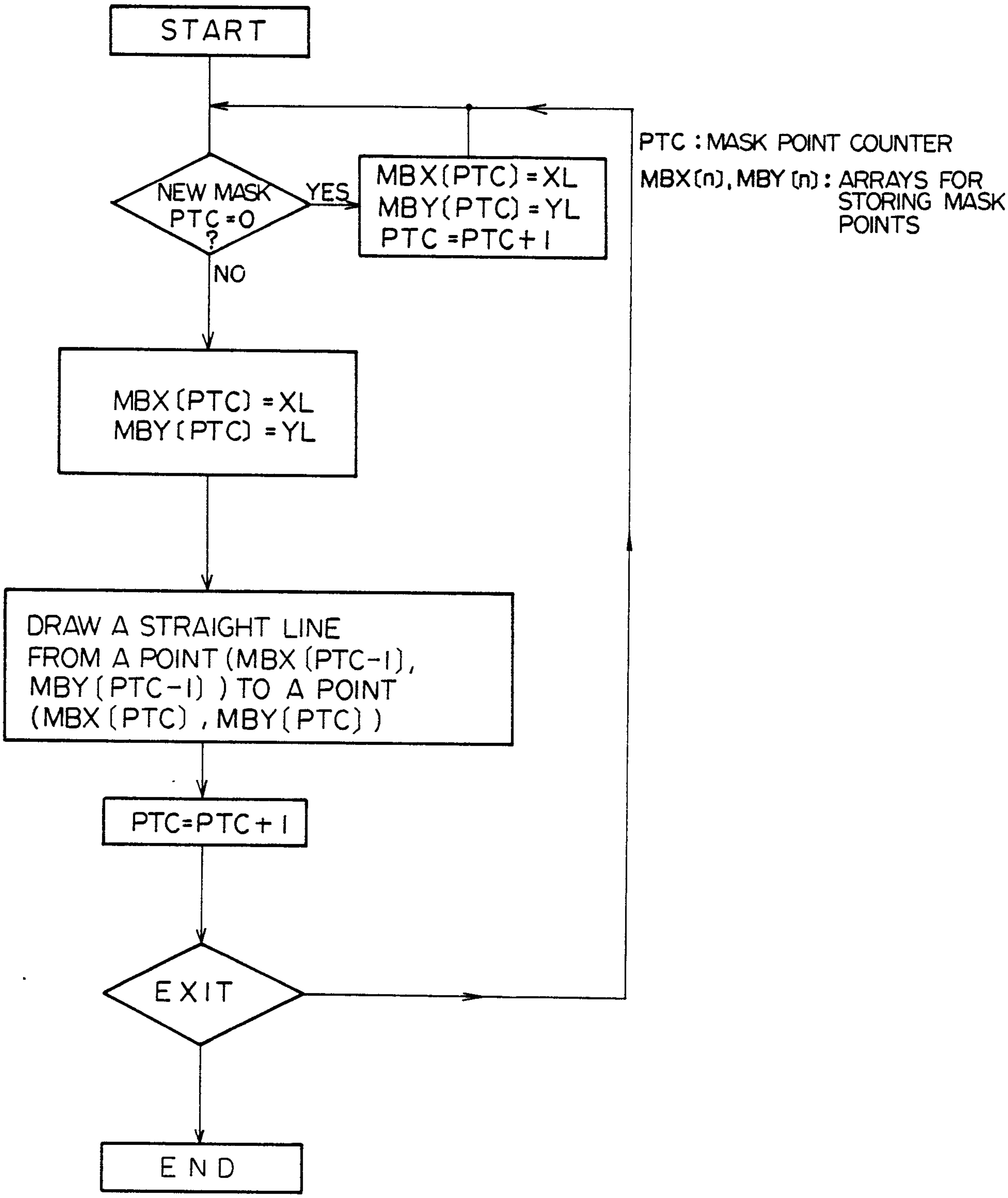

START
NEW MASK PTC=0 ?
YES
NO
MBX(PTC)=XL
MBY(PTC)=YL
PTC=PTC+1
PTC : MASK POINT COUNTER
MBX(n), MBY(n) : ARRAYS FOR STORING MASK POINTS
MBX(PTC)=XL
MBY(PTC)=YL
DRAW A STRAIGHT LINE FROM A POINT (MBX(PTC-1), MBY(PTC-1)) TO A POINT (MBX(PTC), MBY(PTC))
PTC=PTC+1
EXIT
END

FIG. 25

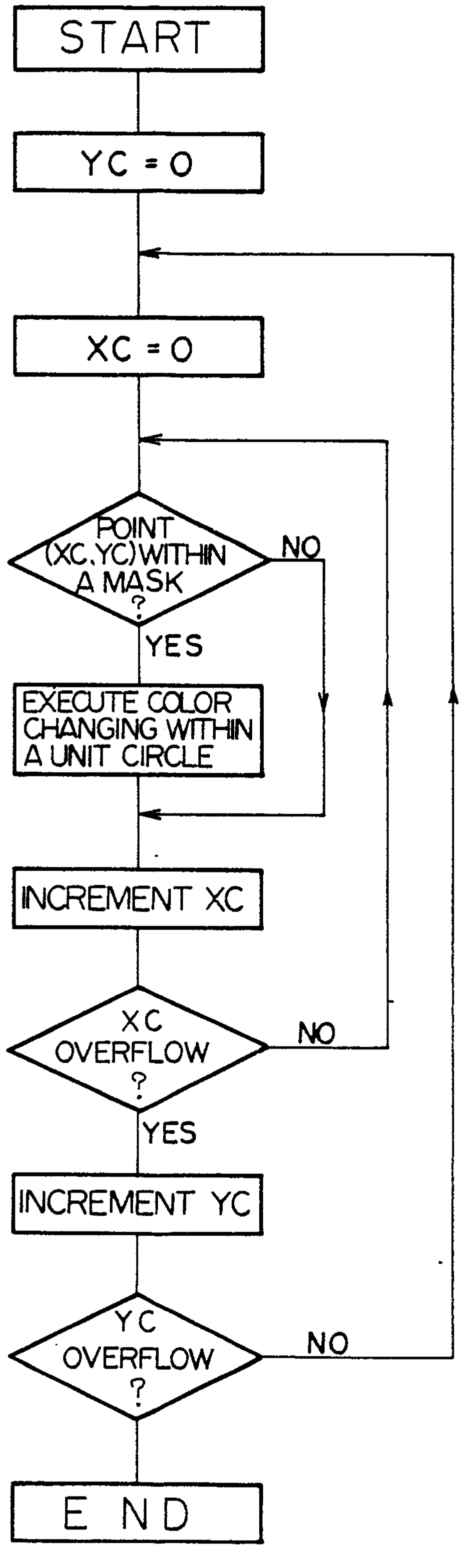


FIG. 24 (A)

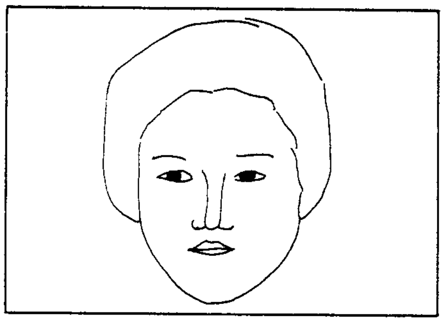

FIG. 24 (B)

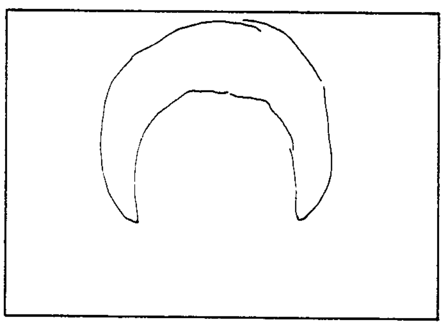

FIG. 26(A)

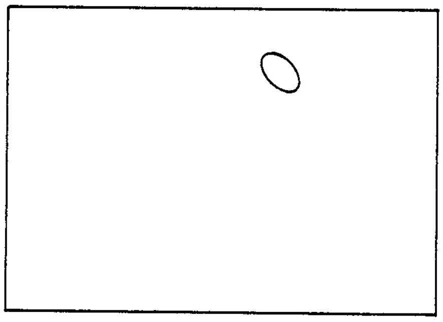

FIG. 26(B)

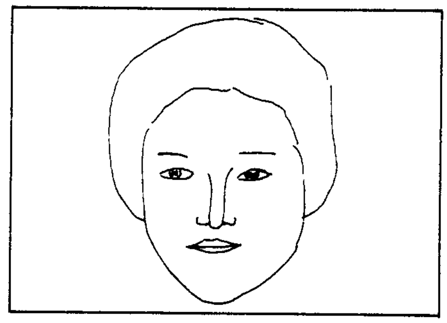

FIG. 26(C)

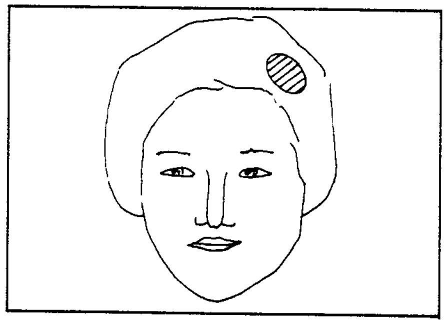

FIG. 27

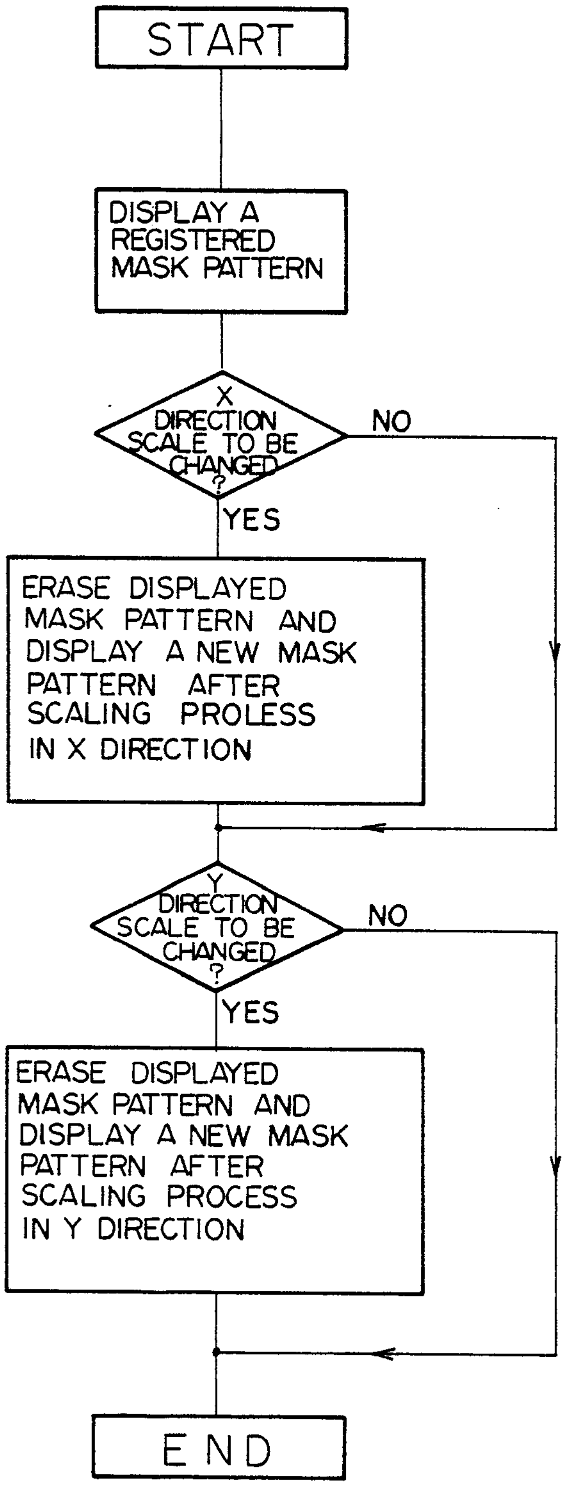
START
DISPLAY A REGISTERED MASK PATTERN
X DIRECTION SCALE TO BE CHANGED ?
NO
YES
ERASE DISPLAYED MASK PATTERN AND DISPLAY A NEW MASK PATTERN AFTER SCALING PROLESS IN X DIRECTION
Y DIRECTION SCALE TO BE CHANGED ?
NO
YES
ERASE DISPLAYED MASK PATTERN AND DISPLAY A NEW MASK PATTERN AFTER SCALING PROCESS IN Y DIRECTION
END

FIG. 28 (A)

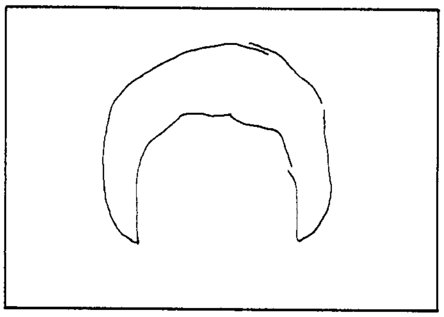

FIG. 28 (B)

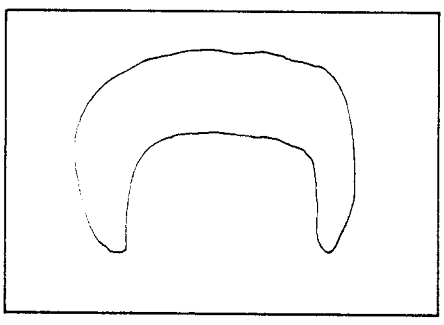

FIG. 28 (C)

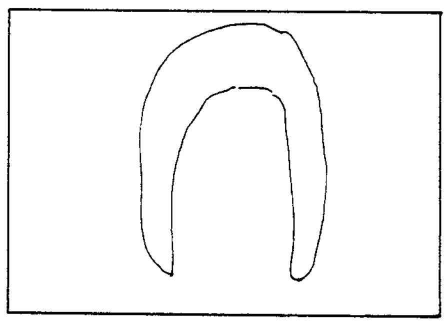

FIG.29

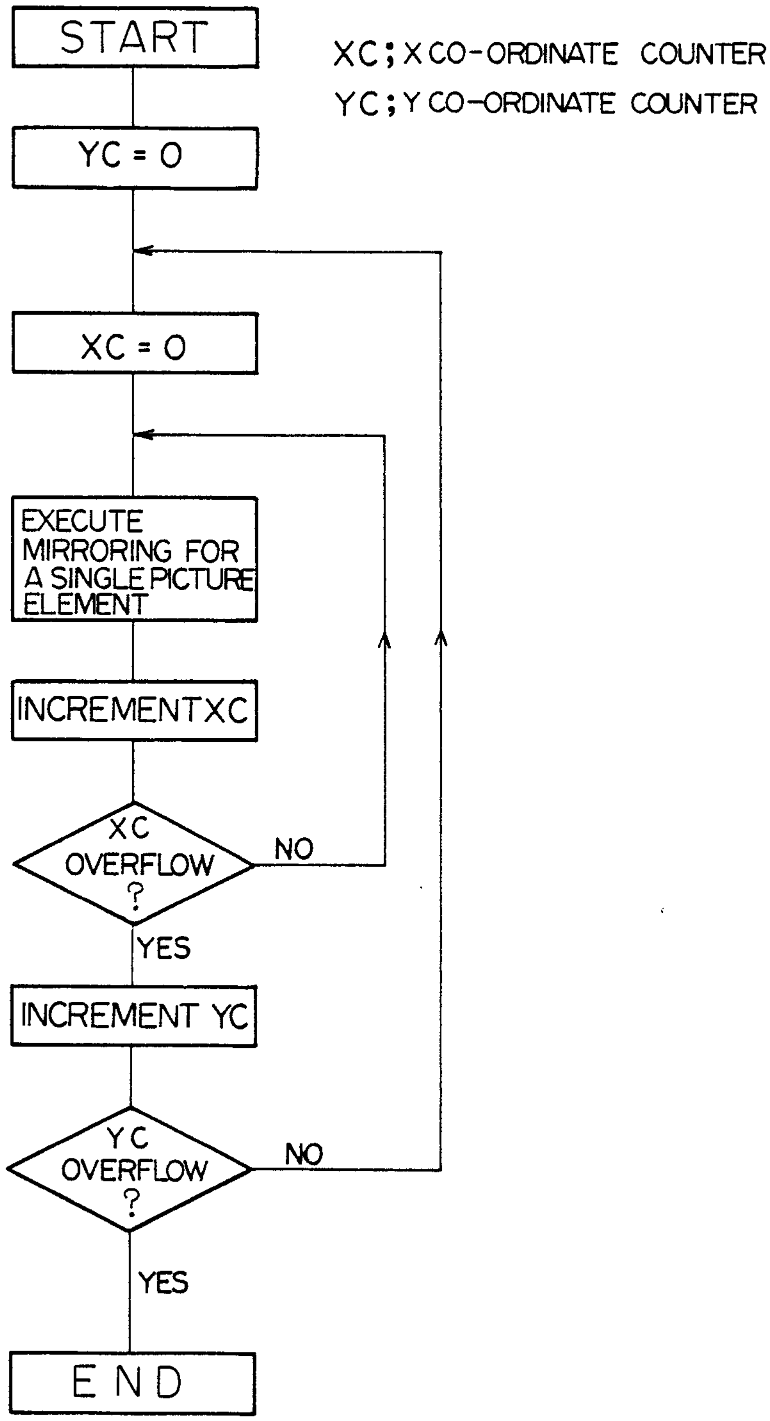
START
XC; X CO-ORDINATE COUNTER
YC; Y CO-ORDINATE COUNTER
YC = 0
XC = 0
EXECUTE MIRRORING FOR A SINGLE PICTURE ELEMENT
INCREMENTXC
XC OVERFLOW ?
NO
YES
INCREMENT YC
YC OVERFLOW ?
NO
YES
END

FIG. 30(A)

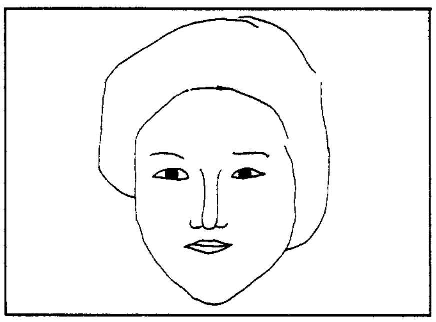

FIG. 30(B)

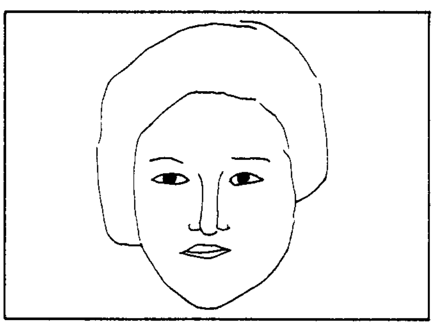

FIG. 31

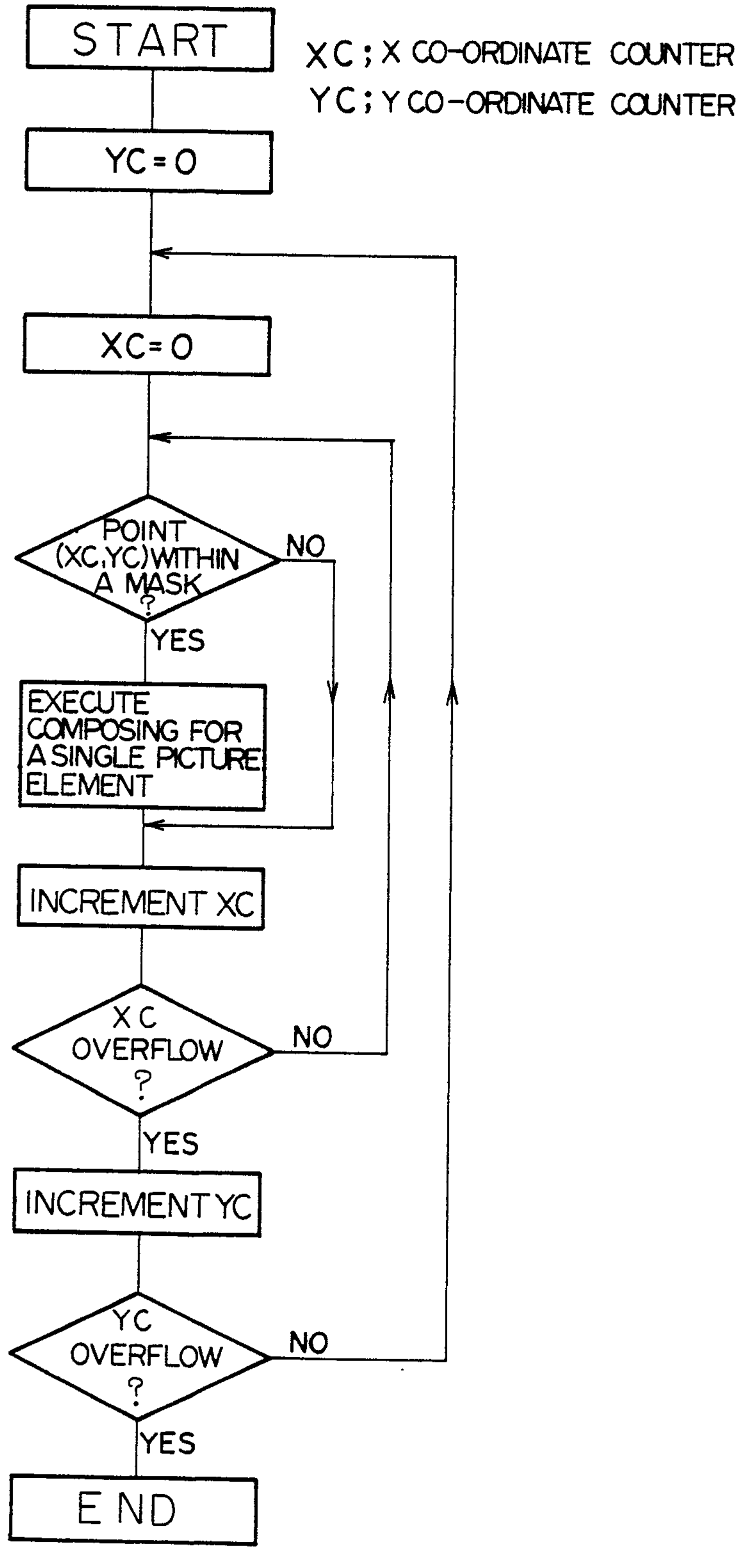

FIG. 32(A)

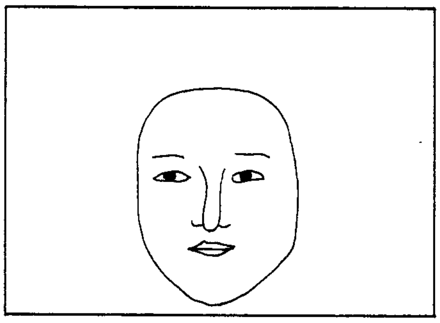

FIG. 32(C)

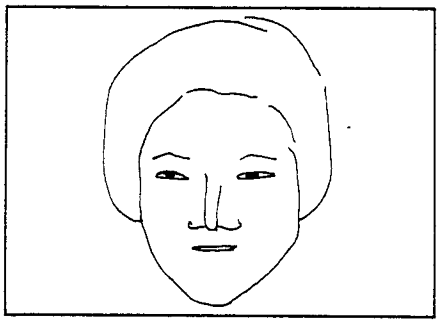

FIG. 32(D)

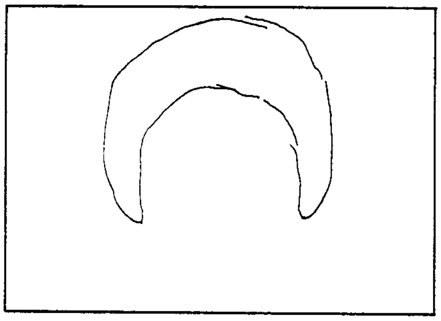

FIG. 32(B)